(19) Europäisches Patentamt
European Patent Office
Office européen des brevets

(11) **EP 4 770 193 A1**

(12) **EUROPEAN PATENT APPLICATION**
published in accordance with Art. 153(4) EPC

(43) Date of publication:
**01.07.2026 Bulletin 2026/27**

(21) Application number: **24855668.0**

(22) Date of filing: **14.08.2024**

(51) International Patent Classification (IPC):
**H04W 36/00** (2009.01)

(52) Cooperative Patent Classification (CPC):
**H04W 36/00; H04W 36/04; H04W 76/36**

(86) International application number:
**PCT/CN2024/111910**

(87) International publication number:
**WO 2025/039942 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.08.2023 CN 202311054353**

(71) Applicant: **Vivo Mobile Communication Co., Ltd.
Dongguan, Guangdong 523863 (CN)**

(72) Inventors:
• **WANG, Yangyang**
  **Dongguan, Guangdong 523863 (CN)**
• **SONG, Erhao**
  **Dongguan, Guangdong 523863 (CN)**
• **BAO, Wei**
  **Dongguan, Guangdong 523863 (CN)**

(74) Representative: **Shieldmark
P.O. Box 90471
2509 LL The Hague (NL)**

(54) **RESOURCE CONFIGURATION METHODS, APPARATUS, TERMINAL AND NETWORK SIDE DEVICE**

(57)     This application discloses a resource configuration method and apparatus, a terminal, and a network side device, and belongs to the field of communication technologies. The resource configuration method in embodiments of this application includes: A terminal receives first configured uplink grant information of a candidate cell used in a layer 1 or layer 2 triggered mobility LTM procedure; sends an uplink message to a target cell during a handover procedure according to the first configured uplink grant information; and releases or deactivates the first configured uplink grant information of the candidate cell after a handover is successfully completed.

```
┌─────────────────────────────────────────────────────────────────┐
│ A terminal receives first configured uplink grant information     │  21
│ of a candidate cell used in an LTM procedure                      │
└─────────────────────────────────────────────────────────────────┘
                              │
                              ▼
┌─────────────────────────────────────────────────────────────────┐
│ The terminal sends an uplink message to a target cell during a    │  22
│ handover procedure according to the first configured uplink       │
│ grant information                                                 │
└─────────────────────────────────────────────────────────────────┘
                              │
                              ▼
┌─────────────────────────────────────────────────────────────────┐
│ The terminal releases or deactivates the first configured uplink  │  23
│ grant information of the candidate cell after a handover is        │
│ successfully completed                                            │
└─────────────────────────────────────────────────────────────────┘
```

FIG. 2

EP 4 770 193 A1

## Description

### CROSS-REFERENCE TO RELATED APPLICATIONS

This application claims priority to Chinese Patent Application No. 202311054353.5, filed in China on August 21, 2023, which is incorporated herein by reference in its entirety.

### TECHNICAL FIELD

This application belongs to the field of communication technologies, and specifically, relates to a resource configuration method and apparatus, a terminal, and a network side device.

### BACKGROUND

In a related technology, a candidate cell may be a candidate cell of a plurality of terminals that perform consecutive layer 1 or layer 2 triggered mobility (L1/L2 Triggered Mobility, LTM) procedures. If the candidate cell configures a dedicated configured grant (Configured Grant, CG) for each terminal, these allocated resources may no longer be used by another terminal in the candidate cell. In addition, because of the consecutive LTM, the candidate cell always may not be a target cell of the terminal, and the terminal does not use a CG resource allocated by the candidate cell. Therefore, a resource corresponding to the CG configuration may not be further allocated until a corresponding terminal releases the resource. In addition, in the consecutive LTM procedures, the terminal does not release the candidate cell after a cell handover is successfully completed, and does not release the candidate cell until explicit release signaling is received. Therefore, the candidate cell reserves a dedicated CG resource for the terminal for a long time, and the CG resource configured by the candidate cell cannot be allocated to another terminal and may not be used all the time, thereby causing a resource waste.

### SUMMARY

Embodiments of this application provide a resource configuration method and apparatus, a terminal, and a network side device, which can resolve a resource waste problem caused by a resource configuration manner of an LTM procedure in a related technology.

According to a first aspect, a resource configuration method is provided. The method is performed by a terminal and includes:

> receiving, by the terminal, first configured uplink grant information of a candidate cell used in an LTM procedure;
> sending, by the terminal, an uplink message to a target cell during a handover procedure according to the first configured uplink grant information; and
> releasing or deactivating, by the terminal, the first configured uplink grant information of the candidate cell after a handover is successfully completed.

According to a second aspect, a resource configuration method is provided. The method is performed by a first network side device and includes:

> sending, by the first network side device, fifth configured uplink grant information to a second network side device, where the fifth configured uplink grant information is configured and sent before a procedure of early TA acquisition of a candidate cell is performed, or the fifth configured uplink grant information is configured and sent during or after a procedure of early TA acquisition of a candidate cell is performed, the fifth configured uplink grant information is configured by the first network side device for a terminal, the first network side device is a network side device of a candidate cell related to LTM, and the second network side device is a network side device of a source cell;
> receiving, by the first network side device, seventh indication information, where the seventh indication information is used to indicate the first network side device to release or deactivate a CG resource that is configured by the first network side device and that is associated with RACH-less LTM; and
> releasing or deactivating, by the first network side device, the CG resource according to the seventh indication information.

According to a third aspect, a resource configuration method is provided. The method is performed by a second network side device and includes:

receiving, by the second network side device, fifth configured uplink grant information sent by a first network side device, where the fifth configured uplink grant information is configured and sent before a procedure of early TA acquisition of a candidate cell is performed, or the fifth configured uplink grant information is configured and sent during or after a procedure of early TA acquisition of a candidate cell is performed, the fifth configured uplink grant information is configured by the first network side device for a terminal, the first network side device is a network side device of a candidate cell related to LTM, and the second network side device is a network side device of a source cell; and

sending, by the second network side device, seventh indication information to the first network side device, where the seventh indication information is used to indicate the first network side device to release or deactivate a CG resource that is configured by the first network side device and that is associated with RACH-less LTM.

According to a fourth aspect, a resource configuration method is provided. The method is performed by a third network side device and includes:

sending, by the third network side device, seventh indication information to a first network side device, where the seventh indication information is used to indicate the first network side device to release or deactivate a CG resource that is configured by the first network side device and that is associated with RACH-less LTM, the first network side device is a network side device of another candidate cell different from a target cell in an LTM procedure, and the third network side device is a network side device of the target cell.

According to a fifth aspect, a resource configuration apparatus is provided, applied to a terminal and including:

a first receiving module, configured to receive first configured uplink grant information of a candidate cell used in an LTM procedure;
a first sending module, configured to send an uplink message to a target cell during a handover procedure according to the first configured uplink grant information; and
a first execution module, configured to release or deactivate the first configured uplink grant information of the candidate cell after a handover is successfully completed.

According to a sixth aspect, a resource configuration apparatus is provided, applied to a first network side device and including:

a second sending module, configured to send fifth configured uplink grant information to a second network side device, where the fifth configured uplink grant information is configured and sent before a procedure of early TA acquisition of a candidate cell is performed, or the fifth configured uplink grant information is configured and sent during or after a procedure of early TA acquisition of a candidate cell is performed, the fifth configured uplink grant information is configured by a first network side device for a terminal, the first network side device is a network side device of a candidate cell related to LTM, and the second network side device is a network side device of a source cell;
a sixth receiving module, configured to receive seventh indication information, where the seventh indication information is used to indicate the first network side device to release or deactivate a CG resource that is configured by the first network side device and that is associated with RACH-less LTM; and
a second execution module, configured to release or deactivate the CG resource according to the seventh indication information.

According to a seventh aspect, a resource configuration apparatus is provided, applied to a second network side device and including:

a seventh receiving module, configured to receive fifth configured uplink grant information sent by a first network side device, where the fifth configured uplink grant information is configured and sent before a procedure of early TA acquisition of a candidate cell is performed, or the fifth configured uplink grant information is configured and sent during or after a procedure of early TA acquisition of a candidate cell is performed, the fifth configured uplink grant information is configured by the first network side device for a terminal, and the first network side device is a network side device of a candidate cell related to LTM; and
a fourth sending module, configured to send seventh indication information to the first network side device, where the seventh indication information is used to indicate the first network side device to release or deactivate a CG resource that is configured by the first network side device and that is associated with RACH-less LTM.

According to an eighth aspect, a resource configuration apparatus is provided, applied to a third network side device and including:

a sixth sending module, configured to send seventh indication information to a first network side device;
where the seventh indication information is used to indicate the first network side device to release or deactivate a CG resource that is configured by the first network side device and that is associated with RACH-less LTM, and the first network side device is a network side device of another candidate cell different from a target cell in an LTM procedure.

According to a ninth aspect, a terminal is provided, the terminal includes a processor and a memory, the memory stores a program or instructions capable of running on the processor, and the program or the instructions are executed by the processor to implement the steps of the method according to the first aspect.

According to a tenth aspect, a terminal is provided, including a processor and a communication interface, where the communication interface is configured to receive first configured uplink grant information of a candidate cell used in an LTM procedure; and send an uplink message to a target cell during a handover procedure according to the first configured uplink grant information; and the processor is configured to release or deactivate the first configured uplink grant information of the candidate cell after a handover is successfully completed.

According to an eleventh aspect, a network side device is provided. The network side device includes a processor and a memory, the memory stores a program or instructions capable of running on the processor, and when the program or the instructions are executed by the processor, the steps of the method according to the second aspect are implemented, the steps of the method according to the third aspect are implemented, or the steps of the method according to the fourth aspect are implemented.

According to a twelfth aspect, a network side device is provided, including a processor and a communication interface, where for example, when the network side device is a first network side device of a candidate cell related to LTM, the communication interface is configured to: send fifth configured uplink grant information to a second network side device, where the fifth configured uplink grant information is configured and sent before a procedure of early TA acquisition of a candidate cell is performed, or the fifth configured uplink grant information is configured and sent during or after a procedure of early TA acquisition of a candidate cell is completed, and the fifth configured uplink grant information is configured by the first network side device for a terminal; and receive seventh indication information, where the seventh indication information is used to indicate the first network side device to release or deactivate a CG resource that is configured by the first network side device and that is associated with RACH-less LTM; and the processor is configured to release or deactivate the CG resource according to the seventh indication information. Alternatively, when the network side device is a second network side device of a source cell, the communication interface is configured to: receive fifth configured uplink grant information sent by a first network side device, where the fifth configured uplink grant information is configured and sent before a procedure of early TA acquisition of a candidate cell is performed, or the fifth configured uplink grant information is configured and sent during or after a procedure of early TA acquisition of a candidate cell, the fifth configured uplink grant information is configured by the first network side device for a terminal, and the first network side device is a network side device of a candidate cell related to LTM; and send seventh indication information to the first network side device, where the seventh indication information is used to indicate the first network side device to release or deactivate a CG resource that is configured by the first network side device and that is associated with RACH-less LTM. Alternatively, when the network side device is a third network side device of a target cell, the communication interface is configured to: send seventh indication information to a first network side device, where the seventh indication information is used to indicate the first network side device to release or deactivate a CG resource that is configured by the first network side device and that is associated with RACH-less LTM, and the first network side device is a network side device of another candidate cell different from the target cell in an LTM procedure.

According to a thirteenth aspect, a readable storage medium is provided. The readable storage medium stores a program or instructions. The program or the instructions are executed by a processor to implement the steps of the method according to the first aspect, or implement the steps of the method according to the second aspect, or implement the steps of the method according to the third aspect, or implement the steps of the method according to the fourth aspect.

According to a fourteenth aspect, a wireless communication system is provided, including: a terminal, a second network side device, and one of a first network side device and a third network side device, where the terminal may be configured to perform the steps of the method according to the first aspect, and the network side device is a network side device of a candidate cell and may be configured to perform the steps of the method according to the second aspect; the second network side device is a network side device of a source cell and may be configured to perform the steps of the method according to the third aspect; and the third network side device is a network side device of a target cell and may be configured to perform the steps of the method according to the fourth aspect.

According to a fifteenth aspect, a chip is provided. The chip includes a processor and a communication interface, the communication interface is coupled to the processor, and the processor is configured to run a program or instructions to implement the steps of the method according to the first aspect, or implement the steps of the method according to the second aspect, or implement the steps of the method according to the third aspect, or implement the steps of the method according to the fourth aspect.

According to a sixteenth aspect, a computer program/program product is provided. The computer program/program product is stored in a storage medium, and the program/program product is executed by at least one processor to implement the steps of the method according to the first aspect, or implement the steps of the method according to the second aspect, or implement the steps of the method according to the third aspect, or implement the steps of the method according to the fourth aspect.

In embodiments of this application, after receiving first configured uplink grant information of a candidate cell used in an LTM procedure, a terminal may send an uplink message to a target cell during a handover procedure according to the first configured uplink grant information, and release or deactivate the first configured uplink grant information of the candidate cell after a handover is successfully completed. Therefore, a resource configured by the candidate cell in the LTM procedure may be released or deactivated in a timely manner for use by another terminal, thereby effectively resolving a problem of resource waste, avoiding a resource waste, and improving resource utilization.

**BRIEF DESCRIPTION OF DRAWINGS**

FIG. 1 is a block diagram of a wireless communication system to which an embodiment of this application is applicable;
FIG. 2 is a flowchart of a resource configuration method according to an embodiment of this application;
FIG. 3 is a flowchart of another resource configuration method according to an embodiment of this application;
FIG. 4 is a flowchart of another resource configuration method according to an embodiment of this application;
FIG. 5 is a flowchart of another resource configuration method according to an embodiment of this application;
FIG. 6 is a schematic diagram of a structure of a resource configuration apparatus according to an embodiment of this application;
FIG. 7 is a schematic diagram of a structure of another resource configuration apparatus according to an embodiment of this application;
FIG. 8 is a schematic diagram of a structure of another resource configuration apparatus according to an embodiment of this application;
FIG. 9 is a schematic diagram of a structure of another resource configuration apparatus according to an embodiment of this application;
FIG. 10 is a schematic diagram of a structure of a communication device according to an embodiment of this application;
FIG. 11 is a schematic diagram of a structure of a terminal according to an embodiment of this application; and
FIG. 12 is a schematic diagram of a structure of a network side device according to an embodiment of this application.

**DESCRIPTION OF EMBODIMENTS**

The following clearly describes technical solutions in embodiments of this application with reference to accompanying drawings in the embodiments of this application. Clearly, the described embodiments are merely some rather than all of the embodiments of this application. All other embodiments acquired by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than the NR system.

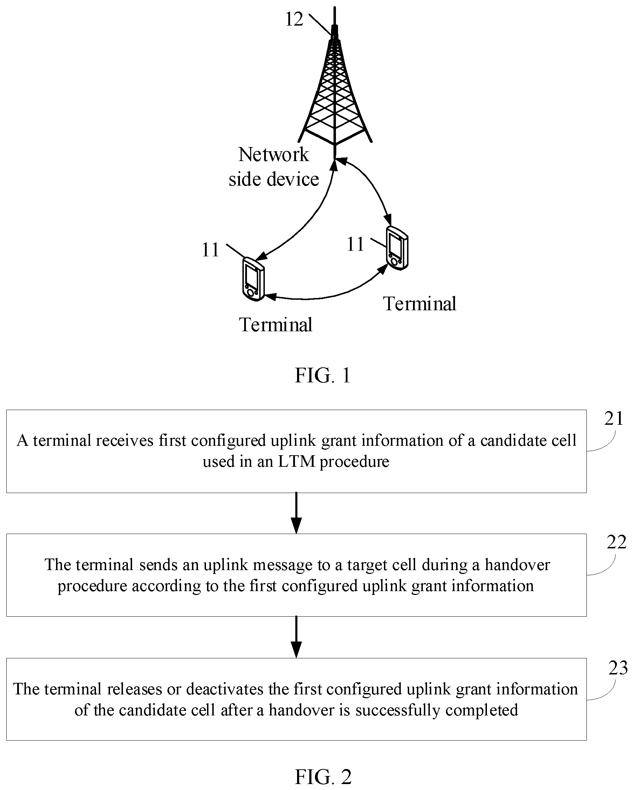

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, and the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the art. The base station is not limited to a specific technical term, provided that the same technical effect is achieved. It should be noted that in embodiments of this application, only a base station in an NR system is used as an example for description, and a specific type of the base station is not limited.

To facilitate understanding of embodiments of this application, the following content is first described.

In a related technology, a layer 1 or layer 2 triggered mobility (L1/L2 triggered mobility, LTM) is introduced, and LTM is for a cell handover triggered by layer 1 or layer 2. Specifically, a serving base station determines a target cell based on a layer 1 measurement result of a terminal, and triggers the terminal to hand over a primary cell or a primary secondary cell (or a primary cell group or a secondary cell group) to the target cell (or a target cell group) by using an LTM command medium access control control element (LTM Command Medium Access Control Control Element, MAC CE) or referred to as an LTM cell switch command MAC CE (LTM cell switch command MAC CE). In a procedure of performing LTM, a network side prepares a plurality of candidate cells in advance, and sends configuration information of the candidate cells to the terminal by using radio resource control (Radio Resource Control, RRC) signaling. After a cell change occurs on the terminal, the configuration information of the candidate cells stored in the terminal is not actively released, but may be used for a subsequent cell handover procedure. Therefore, LTM may also be referred to as continuous LTM.

To reduce a cell replacement delay, in an LTM procedure, the network side NW may trigger the terminal to perform early timing advance (Timing Advance, TA) acquisition of the candidate cell, that is, to perform early TA acquisition of the candidate cell relative to cell handover. The TA is used for uplink transmission of the terminal, so as to ensure that an uplink data packet of the terminal arrives at the base station within an expected time. Specifically, the NW sends a physical downlink control channel (Physical Downlink Control Channel, PDCCH) order to a UE, where the order carries an identifier of the candidate cell. After receiving the PDCCH order, the UE sends a preamble (preamble) to the candidate cell indicated by the PDCCH order. Then, the candidate cell calculates the TA value of the UE based on the preamble.

For maintaining the TA value (value) of the candidate cell, in a procedure of early TA acquisition of the candidate cell, the terminal may not maintain the TA value of the candidate cell, and the serving base station maintains the TA value of the candidate cell. When the serving base station triggers, by using the LTM command MAC CE/LTM cell switch command MAC CE, the terminal to perform the LTM procedure, if the serving base station maintains a TA value of the target cell, the MAC CE carries the TA value of the target cell. After receiving the MAC CE, the terminal may acquire the TA value of the target cell. Therefore, a random access channel (Random Access Channel, RACH) procedure to the target cell does not need to be triggered, so that random access channel-less (RACH-less) cell handover can be performed.

To resolve a resource waste problem caused by a resource configuration manner of the LTM procedure in a related technology, an embodiment of this application proposes a method for configuring a CG of RACH-less LTM. Specifically, during or before/after a procedure in which a terminal performs early TA acquisition of a candidate cell, a candidate cell (source cell) configures a CG of LTM of the terminal, and releases a configured resource when the terminal completes handover. Specific content includes:

1. In the procedure in which the terminal performs early TA acquisition of the candidate cell, the candidate cell allocates a configured UL grant resource to the terminal or activates a CG resource allocated to the terminal.

2. When a network does not send a random access response (Random Access Response, RAR) in the procedure of early TA acquisition of the candidate cell, the candidate cell sends a configured UL grant resource or an activation command of a preconfigured CG to a source cell, and the source cell sends the configured UL grant resource or the activation command of the preconfigured CG to the terminal by using an RRC message or an MAC CE or downlink control information (Downlink Control Information, DCI).

3. When the network sends a random access response RAR in the procedure of early TA acquisition of the candidate cell, the candidate cell may send a configured UL grant resource or an activation command of a preconfigured CG to the terminal by using the RAR.

4. After it is determined that the terminal is successfully handed over or the candidate cell completes sending a handover command, the candidate cell releases or deactivates the configured UL grant resource.

5. After it is determined that the terminal is successfully handed over or the candidate cell completes sending a handover command, the target cell notifies another candidate cell to release or deactivate a configured UL grant resource configured for the terminal, or the source cell notifies another candidate cell to release or deactivate the configured UL grant resource configured for the terminal.

With reference to the accompanying drawings, a resource configuration method and apparatus, a terminal, and a network side device provided in the embodiments of this application are described below in detail by using some embodiments and application scenarios thereof.

Referring to FIG. 2, FIG. 2 is a flowchart of a resource configuration method according to an embodiment of this application. The method is performed by a terminal. As shown in FIG. 2, the method includes the following steps.

Step 21: The terminal receives first configured uplink grant information of a candidate cell used in an LTM procedure.

Step 22: The terminal sends an uplink message to a target cell during a handover procedure according to the first configured uplink grant information.

Step 23: The terminal releases or deactivates the first configured uplink grant information of the candidate cell after a handover is successfully completed.

Herein, the first configured uplink grant information may be configured and sent before a procedure of early TA acquisition of the candidate cell is performed, or may be configured and sent during or after the procedure of early TA acquisition of the candidate cell. Therefore, compared with delivering configured uplink grant information in an accurate phase of LTM in a related technology, a resource of the candidate cell in the LTM procedure can be prevented from being prematurely allocated or activated. The first configured uplink grant information may be used to configure a CG resource, such as a CG uplink resource, for the terminal.

Optionally, the sending the uplink message to the target cell during the handover procedure may be sending the first uplink message to the target cell during the handover procedure.

Optionally, the releasing or deactivating the first configured uplink grant information of the candidate cell includes: determining a CG resource associated with the first configured uplink grant information of the candidate cell, and releasing the CG resource associated with the first configured uplink grant information of the candidate cell.

Therefore, by using the solution in this application, a resource configured by the candidate cell in the LTM procedure may be released or deactivated in a timely manner for use by another terminal, thereby effectively resolving a problem of resource waste, avoiding a resource waste, and improving resource utilization.

In this embodiment of this application, the terminal may receive the first configured uplink grant information in a plurality of manners. Step 21 may include at least one of the following:

(1) After performing the procedure of early TA acquisition of the candidate cell, the terminal receives a first message sent by a source cell, where the first message includes the first configured uplink grant information, for example, the first message may be optionally *an RRCReconfiguration* message or another RRC message;

(2) the terminal receives a first cell handover command sent by the source cell, where the first cell handover command includes the first configured uplink grant information, and the candidate cell is the target cell; and

(3) the terminal receives, in the procedure of early TA acquisition of the candidate cell, a random access response message sent by the source cell or the candidate cell, where the random access response message includes the first configured uplink grant information.

In this way, the first configured uplink grant information is delivered by using the foregoing (1) to (3). Compared with delivering configured uplink grant information in an accurate phase of LTM in a related technology, a resource of the candidate cell in the LTM procedure can be prevented from being prematurely allocated or activated.

It should be noted that the receiving the first message sent by the source cell is specifically receiving the first message sent by a network side device of the source cell. The receiving the first cell handover command sent by the source cell is specifically receiving the first cell handover command sent by the network side device of the source cell. The receiving the random access response message sent by the source cell or the candidate cell is specifically receiving the random access response message sent by the network side device of the source cell or a network side device of the candidate cell.

Optionally, in implementation 1, the first configured uplink grant information may include at least one of the following:

a candidate cell identifier, where for example, the candidate cell identifier may be a candidate configuration identifier;
frequency hopping configuration information;
a quantity of repetitions of a common configuration parameter, that is, a quantity of repeated transmission times of one transport block (Transmission Block, TB) of one configured uplink grant (configured UL grant) in one bundle;
a repeated redundancy version;
a power control parameter, for example, including 0-alpha parameters and a closed-loop parameter;
a quantity of hybrid automatic repeat request processes (Hybrid Automatic Repeat Request process, HARQ process) configured in the first configured uplink grant information;
a transmission period of a CG corresponding to the first configured uplink grant information;
a time domain resource, where for example, that the time domain resource is a time domain resource of a configured UL grant includes: 1) an offset value of the time domain resource relative to a system frame number (System Frame Number, SFN) = 0; and 2) allocation of the configured UL grant in time domain, including a start symbol, a length, and the like;
a frequency domain resource, where for example, the time domain resource is a frequency domain resource of a configured UL grant;
a modulation and coding scheme (Modulation and Coding Scheme, MCS), including a modulation sequence, a target bit rate, and the like;
a size of a transport block TB;
an antenna port;
a sounding reference signal (Sounding Reference Signal, SRS) resource indication;
a demodulation reference signal (Demodulation Reference Signal, DMRS) resource indication;
a precoding matrix indicator;
a transmit power control (Transmit Power Control, TPC) command; and
first indication information, used to indicate that the first configured uplink grant information or the CG corresponding to the first configured uplink grant information is used for first uplink data transmission in a RACH-less LTM procedure.

Optionally, in addition to the foregoing implementation 1, the first configured uplink grant information may use another implementation. In a case that the first configured uplink grant information is sent by using the first message, the first configured uplink grant information meets at least one of the following:

Implementation 2-1: The first configured uplink grant information includes N-bit uplink grant (UL grant) information, N is an integer greater than 0, and the N-bit uplink grant information is transparent to an RRC layer of the terminal; when the terminal uses the N-bit uplink grant information, the RRC layer indicates the N-bit uplink grant information to a physical layer; and a physical layer resource to which the N-bit uplink grant information is mapped is a resource configured by the first configured uplink grant information; and

Implementation 2-2: The first configured uplink grant information includes second configured uplink grant information and M-bit uplink grant information, where the second configured uplink grant information is used to configure some content compared with the first configured uplink grant information; M is an integer greater than 0, and the M-bit uplink grant information is transparent to the RRC layer of the terminal; when the terminal uses the M-bit uplink grant information, the RRC layer indicates the M-bit uplink grant information to the physical layer; and a physical layer resource to which the M-bit uplink grant information is mapped and a resource configured by the second configured uplink grant information constitute the resource configured by the first configured uplink grant information.

Optionally, in a case that the first configured uplink grant information is sent by using the first cell handover command or the random access response message, the first configured uplink grant information may meet at least one of the following:

Implementation 3-1: The first configured uplink grant information includes S-bit uplink grant information, S is an integer greater than 0, and the S-bit uplink grant information is transparent to a MAC layer of the terminal; when the terminal uses the S-bit uplink grant information, the MAC layer indicates the S-bit uplink grant information to a physical layer; and a physical layer resource to which the S-bit uplink grant information is mapped is a resource configured by the first configured uplink grant information; and

Implementation 3-2: The first configured uplink grant information includes third configured uplink grant information and T-bit uplink grant information, where the third configured uplink grant information is used to configure some content compared with the first configured uplink grant information; T is an integer greater than 0, and the T-bit uplink grant information is transparent to the MAC layer of the terminal; when the terminal uses the T-bit uplink grant information, the MAC layer indicates the T-bit uplink grant information to the physical layer; and a physical layer resource to which the T-bit uplink grant information is mapped and a resource configured by the third configured uplink grant information constitute the resource configured by the first configured uplink grant information.

Optionally, in a case that the first configured uplink grant information is sent by using the first message or the random access response message, cell handover may be triggered by using a cell handover command such as *an LTM command MAC CE* or *an LTM cell switch command MAC CE*. Step 21 may include:

The terminal receives a second cell handover command sent by the source cell, where the second cell handover command includes an identifier of the target cell; and

the terminal determines configured uplink grant information of the target cell according to the identifier of the target cell and the first configured uplink grant information, and sends the uplink message to the target cell during the handover procedure by using the configured uplink grant information of the target cell, for example, sends the first uplink message to the target cell during the handover procedure.

Optionally, in addition to the first configured uplink grant information, the terminal may further receive fourth configured uplink grant information of the candidate cell before performing the procedure of early TA acquisition of the candidate cell, where the fourth configured uplink grant information includes at least one of the following:

a candidate cell identifier, where for example, the candidate cell identifier may be a candidate configuration identifier;

frequency hopping configuration information;

a quantity of repetitions of a common configuration parameter;

a repeated redundancy version;

a power control parameter;

a quantity of HARQ processes configured in the fourth configured uplink grant information;

a transmission period of a CG corresponding to the fourth configured uplink grant information; and

second indication information, used to indicate that the fourth configured uplink grant information or the CG corresponding to the fourth configured uplink grant information is used for first uplink data transmission in a RACH-less LTM procedure.

It should be noted that the fourth configured uplink grant information may be used for uplink semi-static configured grant. The first configured uplink grant information and the fourth configured uplink grant information are used together to form complete configured uplink grant information. The network side configures a resource for the terminal based on the first configured uplink grant information and the fourth configured uplink grant information. Content specifically included in the first configured uplink grant information and the fourth configured uplink grant information may be implemented based on a network, which is not limited.

Optionally, in a case that the fourth configured uplink grant information is received, the sending the uplink message to the target cell during the handover procedure in step 22 may include any one of the following:

a) The terminal determines a first uplink resource based on the first configured uplink grant information and the fourth configured uplink grant information that are associated with the target cell, and sends the uplink message to the target cell on the first uplink resource during the handover procedure, where for example, sends the first uplink message to the target cell on the first uplink resource during the handover procedure; and

b) the terminal determines a second uplink resource based on the fourth configured uplink grant information associated with the target cell, and sends the uplink message to the target cell on the second uplink resource during the handover procedure, where for example, sends the first uplink message to the target cell on the second uplink resource during the handover procedure.

In this embodiment of this application, the first configured uplink grant information may be used in combination with activation information. Step 21 may include:

before the terminal performs the procedure of early TA acquisition of the candidate cell, the terminal generally receives, in a cell handover preparation phase, the first configured uplink grant information of the candidate cell used in the LTM procedure, where the first configured uplink grant information includes at least one of the following:

a candidate cell identifier, where for example, the candidate cell identifier may be a candidate configuration identifier;
frequency hopping configuration information;
a quantity of repetitions of a common configuration parameter;
a repeated redundancy version;
a power control parameter, for example, including 0-alpha parameters and a closed-loop parameter;
a quantity of HARQ processes configured in the first configured uplink grant information;
a transmission period of a CG corresponding to the first configured uplink grant information;
a time domain resource, where for example, that the time domain resource is a time domain resource of a configured UL grant includes: 1) an offset value of the time domain resource relative to an SFN = 0; and 2) allocation of the configured UL grant in time domain, including a start symbol, a length, and the like;
a frequency domain resource, where for example, the time domain resource is a frequency domain resource of a configured UL grant;
a modulation and coding scheme MCS, including a modulation sequence, a target bit rate, and the like;
a size of a transport block TB;
an antenna port;
a sounding reference signal SRS resource indication;
a demodulation reference signal DMRS resource indication;
a precoding matrix indicator;
a transmit power control TPC command;
first indication information, used to indicate that the first configured uplink grant information or the CG corresponding to the first configured uplink grant information is used for first uplink data transmission in a RACH-less LTM procedure; and
third indication information, used to indicate whether a CG resource of the candidate cell is activated; and if the CG resource is activated, the UE may directly use the corresponding CG resource when being handed over to the candidate cell; or if the CG resource is not activated, only when the UE receives an activation command before the handover, the UE can use the corresponding CG resource when being handed over to the candidate cell.

Optionally, in a case that the first configured uplink grant information is received before the procedure of early TA acquisition of the candidate cell is performed, before the sending the uplink message to the target cell during the handover procedure according to the first configured uplink grant information, the resource configuration method in this embodiment may further include at least one of the following:

(a) The terminal receives first activation information, where the first activation information includes an identifier of a first candidate cell and fourth indication information, the fourth indication information is used to indicate that a first CG resource is activated, and the first CG resource is a CG resource related to first uplink data (UL data) transmission in a RACH-less LTM procedure of the first candidate cell.

Optionally, the identifier of the first candidate cell is, for example, a candidate configuration identifier.

Optionally, in a case that the first activation information is received, the releasing or deactivating the first configured uplink grant information of the candidate cell in step 23 includes: determining, by the terminal, that the first CG resource is deactivated;

Optionally, in a case that the first activation information is received, when a CG resource configured by the first candidate cell does not include the first CG resource, the terminal ignores the fourth indication information, that is, the terminal may not consider the case as an error case.

Optionally, the first activation information may be carried by at least one of the following: an RRC reconfiguration message, a medium access control control element MAC CE, and a physical downlink control channel PDCCH.

b) The terminal receives a third cell handover command sent by a source cell, where the third cell handover command includes an identifier of the target cell and fifth indication information, the fifth indication information is used to indicate that a second CG resource is activated, and the second CG resource is a CG resource related to first uplink data transmission in a RACH-less LTM procedure of the target cell.

Optionally, the identifier of the target cell is, for example, a configuration identifier of the target cell.

Optionally, in a case that the third cell handover command is received, the releasing or deactivating the first configured uplink grant information of the candidate cell in step 23 includes: determining, by the terminal, that the second CG resource is deactivated.

Optionally, in a case that the third cell handover command is received, when a CG resource configured by the target cell does not include the second CG resource, the terminal ignores the fifth indication information, that is, the terminal may not consider the case as an error case.

c) The terminal receives a random access response message sent by the source cell or the candidate cell, where the random access response message is a response message in the procedure of early TA acquisition of the candidate cell, the random access response message includes sixth indication information, and optionally further includes an identifier of a second candidate cell, the sixth indication information is used to indicate that a third CG resource is activated, and the third CG resource is a CG resource related to first uplink data transmission in a RACH-less LTM procedure of the second candidate cell.

Optionally, the identifier of the second candidate cell is, for example, a candidate configuration identifier.

Optionally, in a case that the random access response message is received, the releasing or deactivating the first configured uplink grant information of the candidate cell includes: determining, by the terminal, that the third CG resource is deactivated.

Optionally, in a case that the random access response message is received, when a CG resource configured by the second candidate cell does not include the third CG resource, the terminal ignores the sixth indication information, that is, the terminal may not consider the case as an error case.

In this way, by using the foregoing (a) to (c), the terminal may perform cell handover according to the activated CG resource.

Optionally, in a case that the first activation information or the random access response message is received, the resource configuration method in this embodiment may further include:

The terminal receives a fourth cell handover command sent by the source cell, where the fourth cell handover command includes the identifier of the target cell; and

the terminal determines configured uplink grant information of the target cell according to the identifier of the target cell and the first configured uplink grant information, and sends the uplink message to the target cell during the handover procedure by using the configured uplink grant information of the target cell, for example, sends the first uplink message to the target cell during the handover procedure.

Optionally, the sending the uplink message to the target cell during the handover procedure in step 22 may include:

determining, by the terminal, a third uplink resource based on the first configured uplink grant information associated with the target cell, and sending the uplink message to the target cell on the third uplink resource during the handover procedure, for example, sending the first uplink message to the target cell on the third uplink resource during the handover procedure.

Optionally, the first configured uplink grant information includes at least one of the following: a common cell radio network temporary identifier (Cell Radio Network Temporary Identifier, C-RNTI) or a temporary C-RNTI. The uplink message is scrambled by using the common C-RNTI or the temporary C-RNTI for network side identification.

Optionally, the uplink message may be scrambled by using a C-RNTI of the terminal.

Optionally, a CG resource configured by the first configured uplink grant information is related to a beam used in the procedure of early TA acquisition of the candidate cell.

Optionally, when the first configured uplink grant information configures a plurality of CG resources, each CG resource is related to one or more beams. Alternatively, one or more CG resources are associated with one beam, for example, one or more CG resources are associated with one beam used in the procedure of early TA acquisition of the candidate cell.

The following describes this application with reference to specific embodiments.

Embodiment 1

In Embodiment 1, for a case that there is no random access response RAR in a procedure in which a UE performs early TA acquisition of a candidate cell, in the procedure of early TA acquisition of the candidate cell (for example, early TA acquisition), or after the procedure of early TA acquisition of the candidate cell is completed, the candidate cell (candidate cell) allocates a CG resource, and sends the CG resource to a source cell, and the source cell (source cell) sends the CG resource to the UE by using an RRC message. A specific UE behavior includes:

Step 1: The UE receives an RRC reconfiguration (*RRCReconfiguration*) message, where the RRC reconfiguration message carries (that is, includes) configuration information of the candidate cell in an LTM procedure. If the configuration information includes CG configuration information, the CG configuration information carries fourth configured uplink grant information, and the fourth configured uplink grant information is specifically described in the foregoing embodiment, and details are not described herein again.

Step 2: The UE receives a PDCCH order sent by a source base station (that is, a base station in the source cell), where the PDCCH order is used to trigger the UE to perform the procedure of early TA acquisition to the candidate cell (for example, a candidate cell #1, that is, C-cell#1), and the PDCCH order may carry the following information:

- an identifier of the candidate cell;
- preamble retransmission or initial transmission indication information;
- a random access preamble index (such as a Random Access Preamble index);
- an uplink UL/supplementary uplink SUL indication;
- a synchronization signal block (Secondary Synchronization/Physical Broadcast Channel (SS/PBCH) index; and
- a physical random access channel (Physical Random Access Channel, PRACH) mask index (Mask index).

Step 3: The UE sends a preamble (preamble) to the candidate cell according to the PDCCH order. Then, the candidate cell may calculate a TA value of the UE according to the preamble, and send the TA value to the source cell.

Step 4: The UE receives a first message sent by the source base station, where the first message carries first configured uplink grant information of one or more candidate cells. For example, the first message may be optionally an RRCReconfiguration message or another RRC message.

Optionally, an implementation of the first configured uplink grant information may be specifically the implementation 1, the implementation 2-1, or the implementation 2-2 in the foregoing embodiment. To avoid repetition, details are not described herein again.

Optionally, the UE stores the first configured uplink grant information.

Optionally, the first configured uplink grant information further includes a common C-RNTI or a temporary C-RNTI.

Optionally, the CG resource configured in the first configured uplink grant information is related to a beam used in the early TA acquisition, or the first uplink configuration information configures a plurality of CG resources, and each CG resource is related to one or more beams, or one or more CG resources are related to one beam.

Step 5: The UE receives an LTM cell handover command sent by the source base station, for example, sent by using a MAC CE, where the LTM cell handover command carries an identifier of the target cell and a TA value of the target cell, for example, carries a configuration identifier of C-cell#1.

Step 6: The UE performs RACH-less LTM cell handover, for example, applies RRC configuration information of the target cell C-cell#1, where the RRC configuration information includes candidate configuration information associated with the target cell and associated first configured uplink grant information, and sends the first uplink message to the target cell C-cell#1, where the first uplink message is, for example, an RRC reconfiguration complete (*RRCReconfiguration-Complete*) message or another uplink message.

Optionally, the UE determines an uplink resource, such as a physical uplink shared channel (Physical Uplink Shared Channel, PUSCH) resource, based on fourth configured uplink grant information and second configured uplink grant information that are associated with the target cell or based on the first configured uplink grant information associated with the target cell (corresponding to a case that the fourth configured uplink grant information does not exist), and sends the uplink message on the uplink resource.

Optionally, the determining a time domain resource of the PUSCH resource includes: determining, by using the following formula, a system frame number (System Frame Number, SFN), a slot (slot), and a symbol (symbol) in which the PUSCH resource is located.

$$[(\text{SFN} \times \text{numberOfSlotsPerFrame} \times \text{numberOfSymbolsPerSlot}) + (\text{slot number in the frame} \times \text{numberOfSymbolsPerSlot}) + \text{symbol number in the slot}] =$$

$$(\text{timeDomainOffset} \times \text{numberOfSymbolsPerSlot} + S + N \times \text{periodicity}) \text{ modulo } (1024 \times \text{numberOfSlotsPerFrame} \times \text{numberOfSymbolsPerSlot}), N \geq 0$$

In the foregoing formula, the SFN, the slot number in the frame (slot number in the frame), and the symbol number in the slot (symbol number in the slot) are time domain locations of the PUSCH resource. Other parameters are:

numberOfSlotsPerFrame: number of slots included in one frame of the target cell;

numberOfSymbolsPerSlot: number of symbols included in one slot of the target cell;

timeDomainOffset: time domain offset carried in the fourth configured uplink grant information or the first configured uplink grant information;

S: S value carried in the fourth configured uplink grant information or the first configured uplink grant information; and

periodicity: period of a configured UL grant carried in the fourth configured uplink grant information or the first configured uplink grant information.

N is a positive integer.

Step 7: After completing sending the first uplink message, for example, *an RRCReconfigurationComplete* message, and acknowledging that a network side device (for example, a target base station) of the target cell successfully receives the first uplink message, for example, the *RRCReconfigurationComplete* message, that is, considers that LTM is successfully performed, the UE releases first configured uplink grant information of all candidate cells.

Optionally, if the UE notifies the target cell of an identifier of the UE, such as a C-RNTI, in the early TA acquisition procedure, the UE scrambles the uplink message by using the C-RNTI when sending the first uplink message.

Optionally, if the UE does not notify the target cell of the identifier of the UE in the early TA acquisition procedure, but the target cell allocates a common C-RNTI or a temporary C-RNTI to the UE when allocating a CG resource to the UE, for example, carried in the send first configured uplink grant information, when sending the first uplink message, the UE may scramble the uplink message by using the common C-RNTI or the temporary C-RNTI, and notify the target cell of the identifier of the UE, such as the C-RNTI, in the uplink message.

Embodiment 2

In Embodiment 2, for a case that there is no random access response RAR in a procedure in which a UE performs early TA acquisition of a candidate cell, in an early TA acquisition procedure, or after the early TA acquisition procedure is completed, the candidate cell allocates a CG resource to the UE that sends a preamble, and optionally sends configuration information of the CG resource to a source cell together with a TA value. The source cell matches the UE, and sends the configuration information of the CG resource to the UE during cell handover together with the TA value. A specific UE behavior includes:

Step 1: The UE receives an *RRCReconfiguration* message, where the RRC reconfiguration message carries configuration information of the candidate cell in an LTM procedure. If the configuration information includes CG configuration information, the CG configuration information carries fourth configured uplink grant information, and the fourth configured uplink grant information is specifically described in the foregoing embodiment, and details are not described herein again.

Step 2: The UE receives a PDCCH order sent by a source base station (that is, a base station in the source cell), where the PDCCH order is used to trigger the UE to perform the procedure of early TA acquisition to the candidate cell (for example, a candidate cell #1, that is, C-cell#1), and information carried in the PDCCH order may be the same as that described in the foregoing Embodiment 1.

Step 3: The UE sends a preamble (preamble) to the candidate cell according to the PDCCH order. Then, the candidate cell may calculate a TA value of the UE according to the preamble, and send the TA value to the source cell.

Step 4: The UE receives an LTM cell handover command (for example, a cell switch command, corresponding to the foregoing first cell handover command) sent by the source base station, for example, sent by using a MAC CE, where the LTM cell handover command carries an identifier of a target cell, a TA value of the target cell, and first configured uplink grant information of the target cell.

Optionally, an implementation of the first configured uplink grant information may be specifically the implementation 1, the implementation 3-1, or the implementation 3-2 in the foregoing embodiment. To avoid repetition, details are not described herein again.

Step 5: The UE performs RACH-less LTM cell handover, for example, applies RRC configuration information of the target cell C-cell#1, where the RRC configuration information includes candidate configuration information associated with the target cell and associated first configured uplink grant information, and sends the first uplink message to the target cell C-cell#1, where the first uplink message is, for example, an RRC reconfiguration complete (*RRCReconfigurationComplete*) message or another uplink message.

Step 6: After completing sending the first uplink message, for example, *an RRCReconfigurationComplete* message, and acknowledging that a network side device (for example, a target base station) of the target cell successfully receives the first uplink message, for example, the *RRCReconfigurationComplete* message, that is, considers that LTM is successfully performed, the UE releases the first configured uplink grant information of the target cell.

Optionally, if the UE notifies the target cell of an identifier of the UE, such as a C-RNTI, in the early TA acquisition procedure, the UE scrambles the uplink message by using the C-RNTI when sending the first uplink message.

Optionally, if the UE does not notify the target cell of the identifier of the UE in the early TA acquisition procedure, but the target cell allocates a common C-RNTI or a temporary C-RNTI to the UE when allocating a CG resource to the UE, for example, carried in the send first configured uplink grant information, when sending the first uplink message, the UE may scramble the uplink message by using the common C-RNTI or the temporary C-RNTI, and notify the target cell of the identifier of the UE, such as the C-RNTI, in the uplink message.

Embodiment 3

In Embodiment 3, for a case that there is no random access response RAR in a procedure in which a UE performs early TA acquisition of a candidate cell, a CG resource is configured in an LTM preparation (preparation) procedure, but the candidate cell may not activate the CG resource for the UE. In the early TA acquisition procedure or after the early TA acquisition procedure, the candidate cell activates an inactive CG resource previously configured, and the source cell sends an activation command to the UE before the handover. A specific UE behavior includes:

> Step 1: The UE receives an *RRCReconfiguration message*, where the RRC reconfiguration message carries configuration information of the candidate cell in the LTM procedure, where if the configuration information includes CG configuration information, the CG configuration information carries first configured uplink grant information; and the first configured uplink grant information is specifically the first configured uplink grant information sent before the procedure of early TA acquisition of the candidate cell is performed in the foregoing embodiment. For content carried in the first configured uplink grant information, refer to the foregoing embodiment. To avoid repetition, details are not described herein again.
> Step 2: The UE receives a PDCCH order sent by a source base station (that is, a base station in the source cell), where the PDCCH order is used to trigger the UE to perform the procedure of early TA acquisition to the candidate cell (for example, a candidate cell #1, that is, C-cell#1), and information carried in the PDCCH order is the same as that described in the foregoing Embodiment 1. Details are not described herein again.
> Step 3: The UE sends a preamble (preamble) to the candidate cell according to the PDCCH order. Then, the candidate cell may calculate a TA value of the UE according to the preamble, and send the TA value to the source cell.
> Step 4: The UE receives first activation information of the candidate cell sent by the source base station, where the first activation information may be specifically the same as that described in the foregoing embodiment, and details are not described herein again.
> Step 5: The UE receives an LTM cell handover command sent by the source base station, for example, sent by using a MAC CE, where the LTM cell handover command carries an identifier of the target cell and a TA value of the target cell, for example, carries a configuration identifier of C-cell#1.
> Step 6: The UE performs RACH-less LTM cell handover, for example, applies RRC configuration information of the target cell C-cell#1, where the RRC configuration information includes candidate configuration information associated with the target cell and associated first configured uplink grant information, and sends the first uplink message to the target cell C-cell#1, where the first uplink message is, for example, an RRC reconfiguration complete (*RRCReconfigurationComplete*) message or another uplink message.
> Step 7: After completing sending the first uplink message, for example, an *RRCReconfigurationComplete* message, and acknowledging that a network side device (for example, a target base station) of the target cell successfully receives the first uplink message, for example, the *RRCReconfigurationComplete* message, that is, the UE considers that after LTM is successfully performed, a CG resource related to the first UL data transmission of all candidate cells is deactivated, that is, does not use the resource until a related activation command is received again.

In this solution, if the UE notifies the target cell of an identifier of the UE, such as a C-RNTI, in the early TA acquisition procedure, the UE scrambles the uplink message by using the C-RNTI when sending the first uplink message.

Embodiment 4

In Embodiment 4, for a case that there is no random access response RAR in a procedure in which a UE performs early TA acquisition of a candidate cell, a CG resource is configured in an LTM preparation procedure, but the candidate cell may not activate the CG resource for the UE. In the early TA acquisition procedure or after the early TA acquisition procedure, the candidate cell activates a CG resource previously configured, and the source cell sends an activation command to the UE by using a handover command during the handover. A specific UE behavior includes:

> Step 1: The UE receives an *RRCReconfiguration message*, where the RRC reconfiguration message carries configuration information of the candidate cell in the LTM procedure, where if the configuration information includes CG configuration information, the CG configuration information carries first configured uplink grant information; and the first configured uplink grant information is specifically the first configured uplink grant information sent before the procedure of early TA acquisition of the candidate cell is performed in the foregoing embodiment. For content carried in the first configured uplink grant information, refer to the foregoing embodiment. To avoid repetition, details are not described herein again.

Step 2: The UE receives a PDCCH order sent by a source base station (that is, a base station in the source cell), where the PDCCH order is used to trigger the UE to perform the procedure of early TA acquisition to the candidate cell (for example, a candidate cell #1, that is, C-cell#1), and information carried in the PDCCH order is the same as that described in the foregoing Embodiment 1. Details are not described herein again.

Step 3: The UE sends a preamble (preamble) to the candidate cell according to the PDCCH order. Then, the candidate cell may calculate a TA value of the UE according to the preamble, and send the TA value to the source cell.

Step 4: The UE receives an LTM cell handover command (such as a cell switch command, corresponding to the foregoing third cell handover command) sent by the source base station, for example, sent by using a MAC CE, where the LTM cell handover command carries an identifier of a target cell (such as a configuration identifier of the target cell), a TA value of the target cell, and activation indication information of the target cell (that is, the foregoing fifth indication information).

Step 5: The UE performs RACH-less LTM cell handover, for example, applies RRC configuration information of the target cell C-cell#1, where the RRC configuration information includes candidate configuration information associated with the target cell and associated first configured uplink grant information, and sends the first uplink message to the target cell C-cell#1, where the first uplink message is, for example, an RRC reconfiguration complete (*RRCReconfigurationComplete*) message or another uplink message.

Step 6: After completing sending the first uplink message, for example, an *RRCReconfigurationComplete* message, and acknowledging that a network side device (for example, a target base station) of the target cell successfully receives the first uplink message, for example, the *RRCReconfigurationComplete* message, that is, the UE considers that after LTM is successfully performed, a CG resource related to the first UL data transmission associated with the target cell is deactivated, that is, does not use the resource until a related activation command is received again.

In this solution, if the UE notifies the target cell of an identifier of the UE, such as a C-RNTI, in the early TA acquisition procedure, the UE scrambles the uplink message by using the C-RNTI when sending the first uplink message.

Embodiment 5

In Embodiment 5, for a case that there is a random access response RAR in a procedure in which a UE performs early TA acquisition of a candidate cell. In the early TA acquisition, the candidate cell allocates a CG resource and generates an RAR message, and sends the RAR message to the source cell. The source cell sends the CG resource to the UE by using the RAR in the early TA acquisition. Alternatively, the candidate cell allocates a CG resource and generates an RAR message, and directly sends the CG resource to the UE by using the RAR message in the early TA acquisition. A specific UE behavior includes:

Step 1: The UE receives an *RRCReconfiguration* message, where the RRC reconfiguration message carries configuration information of the candidate cell in an LTM procedure. If the configuration information includes CG configuration information, the CG configuration information carries fourth configured uplink grant information, and the fourth configured uplink grant information is specifically described in the foregoing embodiment, and details are not described herein again.

Step 2: The UE receives a PDCCH order sent by a source base station (that is, a base station in the source cell), where the PDCCH order is used to trigger the UE to perform the procedure of early TA acquisition to the candidate cell (for example, a candidate cell #1, that is, C-cell#1), and information carried in the PDCCH order may be the same as that described in the foregoing Embodiment 1.

Step 3: The UE sends a preamble (preamble) to the candidate cell according to the PDCCH order. Then, the candidate cell may calculate a TA value of the UE according to the preamble.

Step 4: The UE receives an RAR message (for example, a msg2 message), where the RAR message is sent from the source cell or the candidate cell; and the RAR message sent by the source cell may be a MAC CE scrambled by a C-RNTI or an RA-RNTI, or a MAC PDU scrambled by a C-RNTI or an RA-RNTI. The RAR message carries one or more of an identifier of the candidate cell, a TA value of the candidate cell, and first configured uplink grant information.

Optionally, an implementation of the first configured uplink grant information may be specifically the implementation 1, the implementation 3-1, or the implementation 3-2 in the foregoing embodiment. To avoid repetition, details are not described herein again.

Optionally, the UE stores the first configured uplink grant information.

Step 5: The UE receives an LTM cell handover command sent by the source base station, for example, sent by using a MAC CE, where the LTM cell handover command carries an identifier of the target cell and a TA value of the target cell, for example, carries a configuration identifier of C-cell#1.

Step 6: The UE performs RACH-less LTM cell handover, for example, applies RRC configuration information of the target cell C-cell#1, where the RRC configuration information includes candidate configuration information associated with the target cell and associated first configured uplink grant information, and sends the first uplink message to the target cell C-cell#1, where the first uplink message is, for example, an RRC reconfiguration complete (*RRCReconfiguration-Complete*) message or another uplink message.

Step 7: After completing sending the first uplink message, for example, *an RRCReconfigurationComplete* message, and acknowledging that a network side device (for example, a target base station) of the target cell successfully receives the first uplink message, for example, the *RRCReconfigurationComplete* message, that is, considers that LTM is successfully performed, the UE releases first configured uplink grant information of all candidate cells.

Optionally, if the UE notifies the target cell of an identifier of the UE, such as a C-RNTI, in the early TA acquisition procedure, the UE scrambles the uplink message by using the C-RNTI when sending the first uplink message.

Optionally, if the UE does not notify the target cell of the identifier of the UE in the early TA acquisition procedure, but the target cell allocates a common C-RNTI or a temporary C-RNTI to the UE when allocating a CG resource to the UE, for example, carried in the send first configured uplink grant information, when sending the first uplink message, the UE may scramble the uplink message by using the common C-RNTI or the temporary C-RNTI, and notify the target cell of the identifier of the UE, such as the C-RNTI, in the uplink message.

Embodiment 6

In Embodiment 6, for a case that there is a random access response RAR in a procedure in which a UE performs early TA acquisition of a candidate cell, a CG resource is configured in an LTM preparation procedure, but the candidate cell does not activate the CG resource for the UE. In an early TA acquisition procedure, the candidate cell activates a previously configured CG resource and generates an RAR message, and sends the RAR message to the source cell. The source cell sends an activation command to the UE in the RAR of the early TA acquisition. Alternatively, the candidate cell allocates a CG resource and generates an RAR message, and directly sends the CG resource to the UE by using the RAR message in the early TA acquisition. A specific UE behavior includes:

Step 1: The UE receives an *RRCReconfiguration message*, where the RRC reconfiguration message carries configuration information of the candidate cell in the LTM procedure, where if the configuration information includes CG configuration information, the CG configuration information carries first configured uplink grant information; and the first configured uplink grant information is specifically the first configured uplink grant information sent before the procedure of early TA acquisition of the candidate cell is performed in the foregoing embodiment. For content carried in the first configured uplink grant information, refer to the foregoing embodiment. To avoid repetition, details are not described herein again.

Step 2: The UE receives a PDCCH order sent by a source base station (that is, a base station in the source cell), where the PDCCH order is used to trigger the UE to perform the procedure of early TA acquisition to the candidate cell (for example, a candidate cell #1, that is, C-cell#1), and information carried in the PDCCH order is the same as that described in the foregoing Embodiment 1. Details are not described herein again.

Step 3: The UE sends a preamble (preamble) to the candidate cell according to the PDCCH order. Then, the candidate cell may calculate a TA value of the UE according to the preamble.

Step 4: The UE receives an RAR message (for example, a msg2 message), where the RAR message is sent from the source cell or the candidate cell; and the RAR message sent by the source cell may be a MAC CE scrambled by a C-RNTI or an RA-RNTI, or a MAC PDU scrambled by a C-RNTI or an RA-RNTI. The RAR message carries an identifier of the candidate cell, a TA value of the candidate cell, and activation indication information (that is, the foregoing sixth indication information).

Step 5: The UE receives an LTM cell handover command sent by the source base station, for example, sent by using a MAC CE, where the LTM cell handover command carries an identifier of the target cell and a TA value of the target cell, for example, carries a configuration identifier of C-cell#1.

Step 6: The UE performs RACH-less LTM cell handover, for example, uses RRC configuration information of the target cell C-cell#1, where the RRC configuration information includes candidate configuration information associated with the target cell and associated first configured uplink grant information, and sends the first uplink message to the target cell C-cell#1, where the first uplink message is, for example, an RRC reconfiguration complete (*RRCReconfigurationComplete*) message or another uplink message.

Step 7: After completing sending the first uplink message, for example, an *RRCReconfigurationComplete* message, and acknowledging that a network side device (for example, a target base station) of the target cell successfully receives the first uplink message, for example, the *RRCReconfigurationComplete* message, that is, the UE considers that after LTM is successfully performed, a CG resource related to the first UL data transmission of all candidate cells is deactivated, that is, does not use the resource until a related activation command is received again.

In this solution, if the UE notifies the target cell of an identifier of the UE, such as a C-RNTI, in the early TA acquisition procedure, the UE scrambles the uplink message by using the C-RNTI when sending the first uplink message.

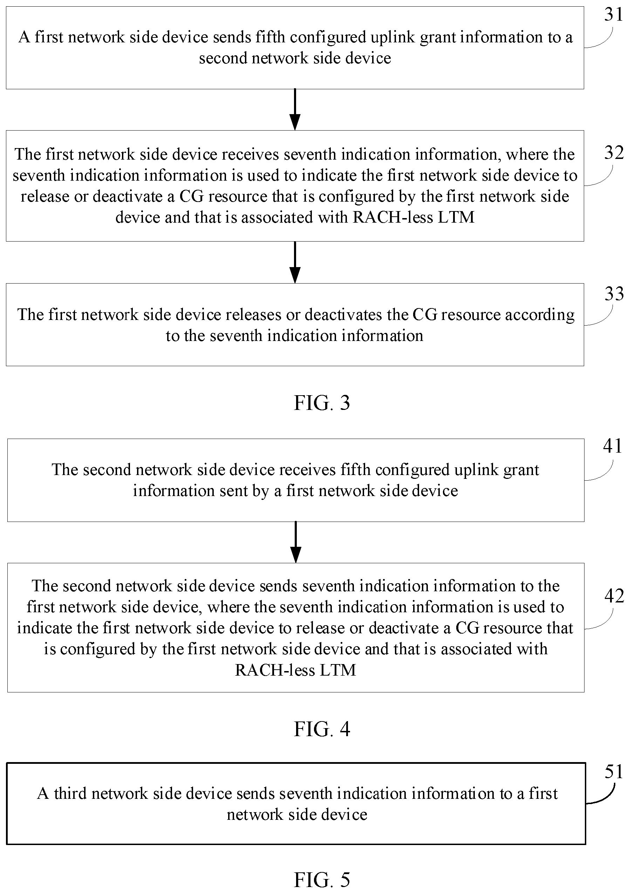

Referring to FIG. 3, FIG. 3 is a flowchart of a resource configuration method according to an embodiment of this application. The method is executed by a first network side device, and the first network side device is a network side device of a candidate cell related to LTM. As shown in FIG. 3, the method includes the following steps.

Step 31: The first network side device sends fifth configured uplink grant information to a second network side device.

In this embodiment, the fifth configured uplink grant information may be configured and sent before a procedure of early TA acquisition of a candidate cell is performed, or the fifth configured uplink grant information may be configured and sent during or after the procedure of early TA acquisition of the candidate cell. The fifth configured uplink grant information is configured by the first network side device for a terminal, and the second network side device is a network side device of a source cell.

Step 32: The first network side device receives seventh indication information, where the seventh indication information is used to indicate the first network side device to release or deactivate a CG resource that is configured by the first network side device and that is associated with RACH-less LTM.

Step 33: The first network side device releases or deactivates the CG resource according to the seventh indication information.

Optionally, the seventh indication information includes an identifier of a first terminal, and the seventh indication information is used to indicate the first network side device to release or deactivate a CG resource that is configured for the first terminal and that is associated with RACH-less LTM; or the seventh indication information includes CG-related information, for example, a CG identifier, and the seventh indication information is used to indicate the first network side device to release or deactivate a CG resource associated with the CG-related information.

Optionally, the first network side device may receive the seventh indication information sent by the second network side device or a third network side device, where the third network side device is a network side device of a target cell. That is, the candidate cell may receive the seventh indication information sent by the source cell or the target cell.

Therefore, by using the solution in this application, a resource of a candidate cell in an LTM procedure can be prevented from being prematurely allocated or activated, a resource configured by the candidate cell in the LTM procedure may be released or deactivated in a timely manner for use by another terminal, thereby effectively resolving a problem of resource waste, avoiding a resource waste, and improving resource utilization.

Optionally, the fifth configured uplink grant information may include at least one of the following:

a terminal identifier;
a resource or a resource identifier associated with the procedure of early TA acquisition of the candidate cell;
a candidate cell identifier, where for example, the candidate cell identifier may be a candidate configuration identifier;
frequency hopping configuration information;
a quantity of repetitions of a common configuration parameter, that is, a quantity of repeated transmission times of one TB of one configured UL grant in one bundle;
a repeated redundancy version;
a power control parameter;
a quantity of HARQ processes configured in the fifth configured uplink grant information;
a transmission period of a CG corresponding to the fifth configured uplink grant information;
a time domain resource, where for example, that the time domain resource is a time domain resource of a configured UL grant includes: 1) an offset value of the time domain resource relative to an SFN = 0; and 2) allocation of the configured UL grant in time domain, including a start symbol, a length, and the like;
a frequency domain resource, where for example, the time domain resource is a frequency domain resource of a configured UL grant;
a modulation and coding scheme MCS, including a modulation sequence, a target bit rate, and the like;
a size of a transport block TB;
an antenna port;
a sounding reference signal SRS resource indication;
a demodulation reference signal DMRS resource indication;
a precoding matrix indicator;

a transmit power control TPC command;

a common C-RNTI or a temporary C-RNTI, where for example, the common C-RNTI or the temporary C-RNTI is configured for the terminal to scramble an uplink message for network side identification;

eighth indication information, used to indicate that the fifth configured uplink grant information or the CG corresponding to the fifth configured uplink grant information is used for first uplink data transmission in a random access channel-less RACH-less LTM procedure; and

ninth indication information, used to indicate whether a CG resource of the candidate cell is activated.

It should be noted that after receiving the fifth configured uplink grant information, the second network side device (that is, the network side device of the source cell) may send configured uplink grant information to a corresponding terminal according to the fifth configured uplink grant information, for example, the first configured uplink grant information or the fourth configured uplink grant information in the foregoing embodiment, so that the terminal performs a cell handover based on the received configured uplink grant information.

In this embodiment of this application, the fifth configured uplink grant information may be used in combination with activation information. The resource configuration method further includes:

The first network side device sends second activation information to the second network side device, where herein, the second activation information may be configured and sent in the procedure of early TA acquisition of the candidate cell, or may be configured and sent after the procedure of early TA acquisition of the candidate cell is completed. The second activation information includes at least one of the following: an identifier of a third candidate cell, tenth indication information, a terminal identifier, a resource associated with the procedure of early TA acquisition of the candidate cell, and a resource identifier associated with the procedure of early TA acquisition of the candidate cell, the tenth indication information is used to indicate that a fourth CG resource is activated, and the fourth CG resource is a CG resource that is configured by the third candidate cell (that is, a candidate cell associated with an identifier of the third candidate cell) for the terminal and that is related to first uplink data transmission in the RACH-less LTM procedure.

Optionally, the second activation information may be sent in different manners based on the LTM belonging to intra-centralized unit intra-CU LTM or the LTM belonging to inter-centralized unit inter-CU LTM. The sending the second activation information to the second network side device may include at least one of the following:

① In a case that the LTM belongs to the intra-centralized unit intra-CU LTM, a first target distributed unit (Distributed Unit, DU) sends the second activation information to a first centralized unit (Centralized Unit, CU), and the first CU sends the second activation information to a first source DU. The first target DU is a DU of the first network side device, that is, the first target DU is a DU of a network side device of the candidate cell. The first CU is a CU shared by the first network side device and the second network side device. The first source DU is a DU of the second network side device, that is, the first source DU is a DU of a network side device of the source cell; and

② in a case that the LTM belongs to the inter-centralized unit inter-CU LTM, a second target DU sends the second activation information to a first target CU, the first target CU sends the second activation information to a first source CU, and the first source CU sends the second activation information to a second source DU. The second target DU and the first target CU are respectively a DU and a CU of the first network side device, that is, are respectively a DU and a CU of the network side device of the candidate cell. The first source CU and the second source DU are respectively a CU and a DU of the second network side device, that is, are respectively a CU and a DU of the network side device of the source cell.

Optionally, the fifth configured uplink grant information may be sent in different manners based on the LTM belonging to the intra-CU LTM or the LTM belonging to the inter-CU LTM. The sending the fifth configured uplink grant information to the second network side device may include at least one of the following:

① In a case that the LTM belongs to the intra-CU LTM, a third target DU sends the fifth configured uplink grant information to a second CU, and the second CU sends the fifth configured uplink grant information to a third source DU. The third target DU is a DU of the first network side device, that is, the third target DU is a DU of the network side device of the candidate cell. The second CU is a CU shared by the first network side device and the second network side device, and the third source DU is a DU of the second network side device, that is, the third source DU is a DU of the network side device of the source cell; and

② in a case that the LTM belongs to the inter-CU LTM, a fourth target DU sends the fifth configured uplink grant information to a second target CU, the second target CU sends the fifth configured uplink grant information to a second source CU, and the second source CU sends the fifth configured uplink grant information to a fourth source DU. The fourth target DU and the second target CU are respectively a DU and a CU of the first network side device, that is, are respectively a DU and a CU of the network side device of the candidate cell. The second source CU and the fourth source DU are respectively a CU and a DU of the second network side device, that is, are respectively a CU and a DU of the network side device of the source cell.

Optionally, after the fifth configured uplink grant information is received, the method in this embodiment further includes:

The first network side device determines a fourth uplink resource based on the fifth configured uplink grant information associated with the candidate cell, and monitors an uplink message of the terminal on the fourth uplink resource, where the uplink message is scrambled by using at least one of the following: a common C-RNTI, a temporary C-RNTI, and a C-RNTI.

Optionally, the first network side device may start to monitor the uplink message at different moments. The monitoring the uplink message of the terminal on the fourth uplink resource may include:

monitoring, by the first network side device, the uplink message of the terminal on the fourth uplink resource starting from a first moment, where the first moment is any one of the following:

a second moment, where the second moment is a moment at which the first network side device completes configuring the fifth configured uplink grant information or the second activation information;
a third moment, where the third moment is a moment at which the first network side device sends the fifth configured uplink grant information or the second activation information to the second network side device;
a fourth moment, where the fourth moment is a moment at which the first network side device completes sending a random access response message to the second network side device or the terminal, and the random access response message is a response message in the procedure of early TA acquisition of the candidate cell;
a moment acquired after first duration is added to the second moment;
a moment at which a first timer ends, where the first timer is started at the second moment;
a moment acquired after second duration is added to the third moment;
a moment at which a second timer ends, where the second timer is started at the third moment;
a moment acquired after third duration is added to the fourth moment; and
a moment at which a third timer ends, where the third timer is started at the fourth moment.

It should be noted that for specific forms of the fifth configured uplink grant information and the second activation information, refer to the foregoing content. The first duration, the second duration, and the third duration may be agreed in advance, configured by a network, or agreed in a protocol, or may be determined according to a delay between corresponding interfaces, a transmission delay between the network side and the terminal, or the like. This is not limited herein. The duration of the first timer, the duration of the second timer, and the duration of the third timer may be agreed in advance, configured by a network, or agreed in a protocol, or may be determined according to a delay between corresponding interfaces, a transmission delay between the network and the terminal, or the like. This is not limited herein.

Optionally, to save resources, the first network side device may stop monitoring the uplink message of the terminal on the fourth uplink resource. For example, when an uplink message is received, monitoring the uplink message of the terminal on the fourth uplink resource may be stopped.

Referring to FIG. 4, FIG. 4 is a flowchart of a resource configuration method according to an embodiment of this application. The method is performed by a second network side device, and the second network side device is a network side device of a source cell. As shown in FIG. 4, the method includes the following steps.

Step 41: The second network side device receives fifth configured uplink grant information sent by a first network side device.

In this embodiment, the fifth configured uplink grant information may be configured and sent before a procedure of early TA acquisition of a candidate cell is performed, or the fifth configured uplink grant information may be configured and sent during or after the procedure of early TA acquisition of the candidate cell. The fifth configured uplink grant information is configured by the first network side device for a terminal, and the first network side device is a network side device of a candidate cell related to LTM.

Step 42: The second network side device sends seventh indication information to the first network side device, where the seventh indication information is used to indicate the first network side device to release or deactivate a CG resource that is configured by the first network side device and that is associated with RACH-less LTM.

Optionally, the seventh indication information includes an identifier of a first terminal, and the seventh indication information is used to indicate the first network side device to release or deactivate a CG resource that is configured for the first terminal and that is associated with RACH-less LTM; or the seventh indication information includes CG-related information, for example, a CG identifier, and the seventh indication information is used to indicate the first network side device to release or deactivate a CG resource associated with the CG-related information.

Therefore, by using the received seventh indication information, the first network side device may release or deactivate a CG resource that is configured by the first network side device and that is associated with RACH-less LTM, thereby effectively resolving a problem of resource waste, avoiding a resource waste, and improving resource utilization.

Optionally, the resource configuration method further includes:

The second network side device sends first configured uplink grant information or first activation information to the terminal, where the first configured uplink grant information is used to configure a CG resource for the terminal, the first activation information includes an identifier of a first candidate cell and fourth indication information, the fourth indication information is used to indicate that a first CG resource is activated, and the first CG resource is a CG resource that is configured by the first candidate cell for the terminal and that is related to first uplink data transmission in a RACH-less LTM procedure.

Optionally, the second network side device may send the first configured uplink grant information or the first activation information to the terminal according to the received fifth configured uplink grant information.

It should be noted that for specific forms of the first configured uplink grant information and the first activation information, refer to the foregoing embodiment. To avoid repetition, details are not described herein again.

Optionally, the fifth configured uplink grant information may include at least one of the following:

a terminal identifier;

a resource or a resource identifier associated with the procedure of early TA acquisition of the candidate cell;

a candidate cell identifier, where for example, the candidate cell identifier may be a candidate configuration identifier;

frequency hopping configuration information;

a quantity of repetitions of a common configuration parameter, that is, a quantity of repeated transmission times of one TB of one configured UL grant in one bundle;

a repeated redundancy version;

a power control parameter;

a quantity of HARQ processes configured in the fifth configured uplink grant information;

a transmission period of a CG corresponding to the fifth configured uplink grant information;

a time domain resource, where for example, that the time domain resource is a time domain resource of a configured UL grant includes: 1) an offset value of the time domain resource relative to an SFN = 0; and 2) allocation of the configured UL grant in time domain, including a start symbol, a length, and the like;

a frequency domain resource, where for example, the time domain resource is a frequency domain resource of a configured UL grant;

a modulation and coding scheme MCS, including a modulation sequence, a target bit rate, and the like;

a size of a transport block TB;

an antenna port;

a sounding reference signal SRS resource indication;

a demodulation reference signal DMRS resource indication;

a precoding matrix indicator;

a transmit power control TPC command; and

a common C-RNTI or a temporary C-RNTI, where for example, the common C-RNTI or the temporary C-RNTI is configured for the terminal to scramble an uplink message for network side setting;

eighth indication information, used to indicate that the fifth configured uplink grant information or the CG corresponding to the fifth configured uplink grant information is used for first uplink data transmission in a random access channel-less RACH-less LTM procedure; and

ninth indication information, used to indicate whether a CG resource of the candidate cell is activated.

In this embodiment of this application, the fifth configured uplink grant information may be used in combination with activation information. The resource configuration method further includes:

The second network side device receives second activation information sent by the first network side device, where herein, the second activation information may be configured and sent in the procedure of early TA acquisition of the candidate cell, or may be configured and sent after the procedure of early TA acquisition of the candidate cell is completed. The second activation information includes at least one of the following: an identifier of a third candidate cell, tenth indication information, a terminal identifier, a resource associated with the procedure of early TA acquisition of the candidate cell, and a resource identifier associated with the procedure of early TA acquisition of the candidate cell, the tenth indication information is used to indicate that a fourth CG resource is activated, and the fourth CG resource is a CG resource that is configured by the third candidate cell (that is, a candidate cell associated with an identifier of the third candidate cell) for the terminal and that is related to first uplink data transmission in the RACH-less LTM procedure.

Optionally, in a case that the LTM belongs to intra-CU LTM, the sending the seventh indication information to the first network side device may include any one of the following:

I) after determining that the terminal successfully accesses a target cell, sending, by a third CU, the seventh indication information to a DU of a candidate cell configuring a CG resource, where the seventh indication information is used to indicate the candidate cell configuring the CG resource to release or deactivate a CG resource that is configured by the candidate cell and that is associated with RACH-less LTM; and the third CU is a CU shared by the second network side device and a network side device of the candidate cell configuring the CG resource; and

II) after determining that the terminal successfully accesses the target cell, sending, by a fourth CU, the seventh indication information to DUs of all candidate cells, where the seventh indication information is used to indicate all the candidate cells to release or deactivate CG resources respectively configured by all the candidate cells; and the fourth CU is a CU shared by the second network side device and a network side device of the candidate cell.

Optionally, before sending the seventh indication information to the DU of the candidate cell configuring the CG resource, the third CU may receive an identifier of the candidate cell configuring the CG resource, so as to send the seventh indication information to a DU of a candidate cell corresponding to the identifier.

Optionally, in a case that the LTM belongs to inter-CU LTM, the sending the seventh indication information to the first network side device may include any one of the following:

i) sending, by a third source CU, the seventh indication information to a CU of a candidate cell configuring a CG resource when a first condition is met, where the seventh indication information is used to indicate the candidate cell configuring the CG resource to release or deactivate a CG resource that is configured by the candidate cell and that is associated with RACH-less LTM; and

ii) sending, by the third source CU, the seventh indication information to CUs of all candidate cells when the first condition is met, where the seventh indication information is used to indicate all the candidate cells to release or deactivate CG resources respectively configured by all the candidate cells.

Optionally, the first condition includes at least one of the following: receiving first notification information and sending, by a fifth source DU, a handover command to the terminal; the first notification information is used to indicate that the terminal successfully accesses the target cell; and the third source CU is a CU of the second network side device, and the fifth source DU is a DU of the second network side device.

Optionally, before sending the seventh indication information to the CU of the candidate cell configuring the CG resource, the third source CU may receive the identifier that is of the candidate cell configuring the CG resource and that is sent by the fifth source DU, so as to send the seventh indication information to a CU of a candidate cell corresponding to the identifier.

Referring to FIG. 5, FIG. 5 is a flowchart of a resource configuration method according to an embodiment of this application. The method is performed by a third network side device, and the third network side device is a network side device of a target cell. As shown in FIG. 5, the method includes the following step.

Step 51: The third network side device sends seventh indication information to a first network side device.

In this embodiment, the seventh indication information is used to indicate the first network side device to release or deactivate a CG resource that is configured by the first network side device and that is associated with RACH-less LTM, and the first network side device is a network side device of another candidate cell different from a target cell in an LTM procedure. That is, the target cell indicates the another candidate cell to release or deactivate a CG resource that is configured by the another candidate cell and that is associated with RACH-less LTM.

Therefore, by using the solution in this application, a resource configured by another candidate cell different from the target cell in the LTM procedure may be released or deactivated in a timely manner for use by another terminal, thereby effectively resolving a problem of resource waste, avoiding a resource waste, and improving resource utilization.

Optionally, in a case that the LTM belongs to intra-CU LTM, the sending the seventh indication information to the first network side device may include any one of the following:

I) after determining that a terminal successfully accesses the target cell, sending, by a fourth CU, the seventh indication information to a DU of a candidate cell configuring a CG resource, where the seventh indication information is used to indicate the candidate cell configuring the CG resource to release or deactivate a CG resource that is configured by the candidate cell and that is associated with RACH-less LTM; and the fourth CU is a CU shared by the third network side device and a network side device of the candidate cell configuring the CG resource; and

II) after determining that the terminal successfully accesses the target cell, sending, by a fifth CU, the seventh indication information to DUs of all candidate cells, where the seventh indication information is used to indicate all the candidate cells to release or deactivate CG resources respectively configured by all the candidate cells; and the fifth CU is a CU shared by the third network side device and a network side device of the candidate cell.

Optionally, before sending the seventh indication information to the DU of the candidate cell configuring the CG resource, the fourth CU may receive an identifier of the candidate cell configuring the CG resource, so as to send the seventh indication information to a DU of a candidate cell corresponding to the identifier.

Optionally, in a case that the LTM belongs to inter-CU LTM, the sending the seventh indication information to the first network side device may include any one of the following:

> i) in a case of receiving second notification information, sending, by a sixth CU, the seventh indication information to a CU of a candidate cell configuring a CG, where the seventh indication information is used to indicate the candidate cell configuring the CG resource to release or deactivate a CG resource that is configured by the candidate cell and that is associated with RACH-less LTM; the second notification information is used to indicate that the terminal successfully accesses the target cell; and the sixth CU is a CU of the network side device of the target cell; and
> ii) in a case of receiving the second notification information, sending, by the sixth CU, the seventh indication information to CUs of all candidate cells, where the seventh indication information is used to indicate all the candidate cells to release or deactivate CG resources respectively configured by all the candidate cells; the second notification information is used to indicate that the terminal successfully accesses the target cell; and the sixth CU is a CU of the network side device of the target cell.

Optionally, before sending the seventh indication information to a CU of the candidate cell configuring the CG resource, the sixth CU may receive an identifier that is of the candidate cell configuring the CG resource and that is sent by a fourth source CU, where the fourth source CU is a CU of a second network side device of a source cell, so as to send the seventh indication information to a CU of a candidate cell corresponding to the identifier.

The following describes this application with reference to specific embodiments.

Embodiment 7

In Embodiment 7, for a case that there is no random access response RAR in a procedure in which a UE performs early TA acquisition of a candidate cell, this is corresponding to the foregoing Embodiment 1, Embodiment 2, Embodiment 3, and Embodiment 4. A network side behavior of a network side device of the candidate cell includes:

Step 1: The network side device of the candidate cell sends a second message to a network side device of a source cell, where the second message carries candidate cell configuration information, and the candidate cell configuration information includes but is not limited to fourth configured uplink grant information (or fifth configured uplink grant information, corresponding to a case that activation information is used in combination) and RACH configuration information for early TA acquisition. Optionally, the fourth configured uplink grant information may be described as in the foregoing embodiment, and details are not described herein again.

Optionally, the second message may be a handover request determining message in a case of inter-CU switching. Alternatively, the second message may be a UE context setup (UE Context setup) message, a UE context modification (UE Context Modification) message, or the like in a case of intra-CU switching.

Step 2: If a RACH resource for early TA acquisition is shared, the network side device of the candidate cell receives information related to a contention tree random access (Contention Free Random Access, CFRA) resource from the network side device of the source cell, optionally, receives a UE identifier.

An effect achieved in step 2 is as follows: Because the RACH resource for early TA acquisition of the candidate cell is shared, when the UE performs a procedure of early TA acquisition of the candidate cell, the candidate cell cannot determine a UE identity by using a PRACH resource and a preamble used by the UE. Based on step 2, before the source cell triggers the UE to perform the procedure of early TA acquisition of the candidate cell, the candidate cell is notified of the UE identity and the used RACH resource, so that the candidate cell determines the UE identity, and can allocate a corresponding CG resource to the UE.

Step 3: The network side device of the candidate cell receives a preamble on a configured PRACH resource for early TA acquisition, and calculates a TA value according to the preamble. In addition, if the RACH resource for early TA acquisition is not shared, the candidate cell determines the UE identity according to the RACH resource.

Optionally, for the cases of the foregoing Embodiment 1 and Embodiment 2, the network side device of the candidate cell configures first configured uplink grant information for the terminal, and content included in the first configured uplink grant information is specifically described in the foregoing embodiments.

Optionally, for the cases of the foregoing Embodiment 3 and Embodiment 4, the network side device of the candidate cell sends second activation information to the network side device of the source cell, and the second activation information is specifically described in the foregoing embodiments.

Optionally, if the candidate cell cannot acquire the UE identifier in the foregoing step 2, a common C-RNTI or a temporary C-RNTI may be carried in the sent fifth configured uplink grant information. The common C-RNTI or the temporary C-RNTI is used to scramble an uplink message, so that a correct descrambling manner can be subsequently used when the uplink message is monitored.

Step 4: The network side device of the candidate cell sends the TA value, the UE identifier, the fifth configured uplink grant information, or the second activation information to the network side device of the source cell. A specific method is as follows:

- For intra-CU LTM: A target DU sends the TA value and the fifth configured uplink grant information or the second activation information are sent to a CU by using a first interface message (for example, a UE Context Modification Required message); and the CU sends the TA value and the fifth configured uplink grant information or the second activation information to a source DU by using a second interface message (for example, a UE Context Modification Request message);

- for inter-CU LTM: the target DU sends the TA value and the fifth configured uplink grant information or the second activation information to a target CU, the target CU sends the TA value and the fifth configured uplink grant information or the second activation information to a source CU, and the source CU sends the TA value and the fifth configured uplink grant information or the second activation information to the source DU.

Step 5: Optionally, for the cases of the foregoing Embodiment 1 and Embodiment 2, the network side device of the candidate cell determines an uplink PUSCH resource based on first configured uplink grant information and fourth configured uplink grant information that are associated with the candidate cell, or based on first configured uplink grant information associated with the candidate cell (corresponding to a case that the fourth configured uplink grant information does not exist); or for the cases of the foregoing Embodiment 3 and Embodiment 4, the network side device of the candidate cell determines an uplink PUSCH resource based on first configured uplink grant information associated with the candidate cell.

Then, the network side device of the candidate cell starts to monitor a PUSCH of the UE on the uplink PUSCH resource at a first moment, and the first moment may be any one of the following:

a second moment, that is, a moment at which the network side device of the candidate cell completes configuring the fifth configured uplink grant information or the second activation information;

a third moment, that is, a moment at which the network side device of the candidate cell sends the fifth configured uplink grant information or the second activation information to the network side device of the source cell;

a moment acquired after first duration is added to the second moment;

a moment at which a first timer ends, where the first timer is started at the second moment;

a moment acquired after second duration is added to the third moment; and

a moment at which a second timer ends, where the second timer is started at the third moment.

Herein, the first duration, the second duration, the duration of the first timer, and the duration of the second timer may be determined according to a delay between corresponding interfaces, a transmission delay between the NW and the UE, and the like.

Step 6: In a case that the candidate cell is a target cell, the network side device of the candidate cell monitors the PUSCH of the UE on the determined uplink PUSCH resource, for example, including an RRCReconfigurationComplete message.

Step 7: The network side device of the target cell stops monitoring on the determined uplink PUSCH resource, and releases the uplink PUSCH resource.

Step 8: The network side device of the target cell sends indication information (that is, the foregoing seventh indication information) to a network side device of another candidate cell, or the network side device of the target cell indicates the network side device of the source cell to send indication information (that is, the foregoing seventh indication information) to a network side device of another candidate cell, or the network side device of the source cell indicates, after completing sending a handover command to the UE, another candidate cell to release a configured UL grant resource that is allocated to the UE and that is associated with RACH-less LTM. Specifically,

- for intra-CU LTM, any one of the following is included:

1) A source DU sends, to a CU, an identifier of a candidate cell configuring a configured UL grant resource (that is, a CG resource) for the UE. After the CU determines that the UE successfully accesses the target cell, for example, after receiving an RRCReconfigurationComplete message sent by the UE and/or an indication that the UE successfully gains access as sent by a target DU, or after the CU determines that the source DU sends a handover command to the UE, the CU notifies a DU of the candidate cell configuring the configured UL grant resource to release or deactivate the configured UL grant resource.

A feature of 1) is as follows: The source DU stores information about the candidate cell configuring the CG resource, and notifies the CU, and the CU notifies the DU of the related candidate cell to release the configured CG resource.

2) After the CU determines that the UE successfully accesses the target cell, for example, receives an RRCReconfigurationComplete message sent by the UE and/or receives an indication that the UE successfully gains access as sent by the target DU, or after the CU determines that the source DU sends a handover command to the UE, the CU notifies DUs of all candidate cells to release or deactivate the configured CG resource.

A feature of 2) is as follows: The source DU stores information about the candidate cell configuring the CG resource, but does not notify the CU, and the CU notifies the DUs of all the candidate cells to release the configured CG resource.

3) After the CU determines that the UE successfully accesses the target cell, for example, receives an RRCReconfigurationComplete message sent by the UE and/or receives an indication that the UE successfully gains access as sent by the target DU, or after the CU determines that the source DU sends a handover command to the UE, the CU notifies a DU of a candidate cell configuring a configured UL grant resource to release or deactivate the configured UL grant resource.

A feature of 3) is as follows: The source CU stores information about the candidate cell configuring the CG resource, and after determining that the UE successfully accesses the target cell, notifies the DU of the related candidate cell to release the configured CG resource.

- For inter-CU LTM, any one of the following is included:

    a) A source DU sends an identifier of a candidate cell configuring a configured UL grant resource for the UE to a source CU:

- After a target CU determines that the UE successfully accesses the target cell, for example, receives an RRCReconfigurationComplete message sent by the UE and/or receives an indication that the UE successfully gains access as sent by a target DU, the target CU notifies the source CU, and the source CU notifies a CU of the candidate cell configuring the configured UL grant resource to release or deactivate the configured UL grant resource;
- after the source CU determines that the source DU sends a handover command to the UE, the source CU notifies the CU of the candidate cell configuring the configured UL grant resource to release or deactivate the configured UL grant resource.

A feature of a) is as follows: The source DU stores information about the candidate cell configuring the CG resource, and notifies the CU that the CU notifies the DU of the related candidate cell to release the configured CG resource.

b) After the target CU determines that the UE successfully accesses the target cell, for example, receives an RRCReconfigurationComplete message sent by the UE and/or receives an indication that the UE successfully gains access as sent by the target DU, or after the source CU determines that the source DU sends a handover command to the UE, the target CU notifies the source CU, and the source CU notifies DUs of all candidate cells to release or deactivate the configured UL grant resource.

A feature of b) is as follows: The source DU stores information about the candidate cell configuring the CG resource, but does not notify the source CU, and the source CU notifies the DUs of all the candidate cells to release the configured CG resource.

c) After a target CU determines that the UE successfully accesses the target cell, for example, receives an RRCReconfigurationComplete message sent by the UE and/or receives an indication that the UE successfully gains access as sent by a target DU, the target CU notifies the source CU, and the source CU notifies a CU of the candidate cell configuring the configured UL grant resource to release or deactivate the configured UL grant resource.

Alternatively, after the source CU determines that the source DU sends a handover command to the UE, the source CU notifies the CU of the candidate cell configuring the configured UL grant resource to release or deactivate the configured UL grant resource.

A feature of c) is as follows: The source CU stores information about the candidate cell configuring the CG resource, and the CU notifies the DU of the related candidate cell to release the configured CG resource.

d) The source CU notifies the target CU of the CU of the candidate cell configuring the configured UL grant resource. After determining that the UE successfully accesses the target cell, the target CU indicates the CU of the candidate cell configuring the configured UL grant resource to release or deactivate the configured UL grant resource.

A feature of d) is as follows: The target CU stores information about the candidate cell configuring the CG resource, and the CU notifies the DU of the related candidate cell to release the configured CG resource.

Step 9: The network side device of the target cell sends downlink information to the UE, so as to assist the UE in determining that an LTM cell handover procedure is completed.

Embodiment 8

In Embodiment 8, for a case that there is a random access response RAR in a procedure in which a UE performs early TA acquisition of a candidate cell, this is corresponding to the foregoing Embodiment 5 and Embodiment 6. A network side behavior of a network side device of the candidate cell includes:

Steps 1-3 are the same as steps 1-3 in the foregoing Embodiment 7.
Step 4-1: Optionally, the network side device of the candidate cell sends the UE identity and the RAR (including the TA value and the foregoing fifth configured uplink grant information or the foregoing second activation information) to the network side device of the source cell, and then the network side device of the source cell sends the RAR (including the TA value and the foregoing first configured uplink grant information or the foregoing first activation information) to the UE.

A specific method for sending the RAR by the network side device of the source cell is as follows:

- For intra-CU LTM: A target DU sends a candidate cell identifier, the TA value, and the fifth configured uplink grant information or the second activation information are sent to a CU by using a first interface message (for example, a UE Context Modification Required message); and the CU sends the candidate cell identifier, the TA value, and the fifth configured uplink grant information or the second activation information to a source DU by using a second interface message (for example, a UE Context Modification Request message);
- for inter-CU LTM: the target DU sends the candidate cell identifier, the TA value, and the fifth configured uplink grant information or the second activation information to a target CU, the target CU sends the candidate cell identifier, the TA value, and the fifth configured uplink grant information or the second activation information to a source CU, and the source CU sends the candidate cell identifier, the TA value, and the fifth configured uplink grant information or the second activation information to the source DU.

Step 4-2: Optionally, the network side device of the candidate cell sends the RAR (including the candidate cell identifier, the TA value, and the foregoing first configured uplink grant information or the foregoing first activation information) to the UE.

Step 5: For the cases of the foregoing Embodiment 5 and Embodiment 6, the network side device of the candidate cell determines an uplink PUSCH resource based on first configured uplink grant information and fourth configured uplink grant information that are associated with the candidate cell, or based on first configured uplink grant information associated with the candidate cell (corresponding to a case that the fourth configured uplink grant information does not exist).

Then, the network side device of the candidate cell starts to monitor a PUSCH of the UE on the uplink PUSCH resource at a first moment, and the first moment may be any one of the following:

a second moment, that is, a moment at which the network side device of the candidate cell completes configuring the fifth configured uplink grant information or the second activation information;
a third moment, that is, a moment at which the network side device of the candidate cell sends the fifth configured uplink grant information or the second activation information to the network side device of the source cell;
a fourth moment, that is, a moment at which the network side device of the candidate cell completes sending the RAR to the network side device of the source cell or the terminal;
a moment acquired after first duration is added to the second moment;
a moment at which a first timer ends, where the first timer is started at the second moment;
a moment acquired after second duration is added to the third moment;
a moment at which a second timer ends, where the second timer is started at the third moment;
a moment acquired after third duration is added to the fourth moment; and
a moment at which a third timer ends, where the third timer is started at the fourth moment.

Herein, the first duration, the second duration, the third duration, the duration of the first timer, the duration of the second timer, and the duration of the third timer may be determined according to a delay between corresponding interfaces, a transmission delay between the NW and the UE, and the like.

Steps 6-9 are the same as steps 6-9 in the foregoing Embodiment 7.

Embodiment 9

In Embodiment 9, for another candidate cell (non-target cell), a corresponding network side behavior includes:

Steps 1-5 are the same as steps 1-5 in the foregoing Embodiment 7.

Step 6: For the cases of Embodiment 1 and Embodiment 2, the network side device of the candidate cell receives indication information (for example, the foregoing seventh indication information) by using interface signaling, so as to indicate the network side device of the candidate cell to release a configured UL grant resource that is configured for a first UE and that is associated with RACH-less LTM, where the indication information carries an identifier of the first UE; or the indication information includes an identifier or configuration information of the configured UL grant, used to indicate a corresponding candidate cell to release an associated CG resource.

For the cases of Embodiment 3 and Embodiment 4, the network side device of the candidate cell receives indication information (for example, the foregoing seventh indication information) by using interface signaling, so as to indicate the network side device of the candidate cell to deactivate a configured UL grant resource that is allocated to the first UE and that is associated with RACH-less LTM, where the indication information carries an identifier of the first UE; or the indication information includes an identifier or configuration information of the configured UL grant, used to indicate a corresponding candidate cell to deactivate an associated CG resource.

Step 7: The network side device of the candidate cell releases or deactivates the configured UL grant resource.

The resource configuration method provided in the embodiments of this application may be performed by a resource configuration apparatus. In the embodiments of this application, an example in which the resource configuration apparatus performs the resource configuration method is used to describe the resource configuration apparatus provided in the embodiments of this application.

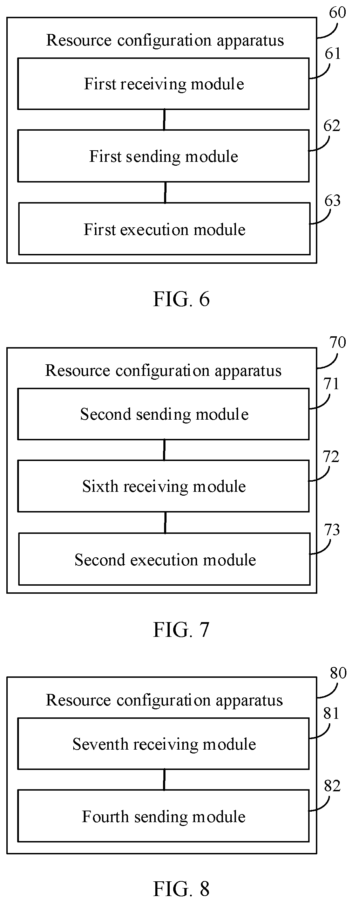

Referring to FIG. 6, FIG. 6 is a schematic diagram of a structure of a resource configuration apparatus according to an embodiment of this application. The apparatus is applied to a terminal. As shown in FIG. 6, a resource configuration apparatus 60 includes:

a first receiving module 61, configured to receive first configured uplink grant information of a candidate cell used in an LTM procedure;

a first sending module 62, configured to send an uplink message to a target cell during a handover procedure according to the first configured uplink grant information; and

a first execution module 63, configured to release or deactivate the first configured uplink grant information of the candidate cell after a handover is successfully completed.

Optionally, the first receiving module 61 is specifically configured to perform at least one of the following:

after performing a procedure of early TA acquisition of the candidate cell, receiving a first message sent by a source cell, where the first message includes the first configured uplink grant information;

receiving, a first cell handover command sent by the source cell, where the first cell handover command includes the first configured uplink grant information, and the candidate cell is the target cell; and

receiving, in the procedure of early TA acquisition of the candidate cell, a random access response message sent by the source cell or the candidate cell, where the random access response message includes the first configured uplink grant information.

Optionally, the first configured uplink grant information includes at least one of the following:

a candidate cell identifier;
frequency hopping configuration information;
a quantity of repetitions of a common configuration parameter;
a repeated redundancy version;
a power control parameter;
a quantity of HARQ processes configured in the first configured uplink grant information;
a transmission period of a CG corresponding to the first configured uplink grant information;
a time domain resource;
a frequency domain resource;
a modulation and coding scheme MCS;
a size of a transport block TB;
an antenna port;
a sounding reference signal SRS resource indication;
a demodulation reference signal DMRS resource indication;
a precoding matrix indicator;
a transmit power control TPC command; and

first indication information, used to indicate that the first configured uplink grant information or the CG corresponding to the first configured uplink grant information is used for first uplink data transmission in a random access channel-less RACH-less LTM procedure.

Optionally, in a case that the first configured uplink grant information is sent by using the first message, the first configured uplink grant information meets at least one of the following:

the first configured uplink grant information includes N-bit uplink grant information, N is an integer greater than 0, and the N-bit uplink grant information is transparent to a radio resource control RRC layer of the terminal; when the terminal uses the N-bit uplink grant information, the RRC layer indicates the N-bit uplink grant information to a physical layer; and a physical layer resource to which the N-bit uplink grant information is mapped is a resource configured by the first configured uplink grant information; and

the first configured uplink grant information includes second configured uplink grant information and M-bit uplink grant information, M is an integer greater than 0, and the M-bit uplink grant information is transparent to the RRC layer of the terminal; when the terminal uses the M-bit uplink grant information, the RRC layer indicates the M-bit uplink grant information to the physical layer; and a physical layer resource to which the M-bit uplink grant information is mapped and a resource configured by the second configured uplink grant information constitute the resource configured by the first configured uplink grant information.

Optionally, in a case that the first configured uplink grant information is sent by using the first cell handover command or the random access response message, the first configured uplink grant information meets at least one of the following:

the first configured uplink grant information includes S-bit uplink grant information, S is an integer greater than 0, and the S-bit uplink grant information is transparent to a medium access control MAC layer of the terminal; when the terminal uses the S-bit uplink grant information, the MAC layer indicates the S-bit uplink grant information to a physical layer; and a physical layer resource to which the S-bit uplink grant information is mapped is a resource configured by the first configured uplink grant information; and

the first configured uplink grant information includes third configured uplink grant information and T-bit uplink grant information, T is an integer greater than 0, and the T-bit uplink grant information is transparent to the MAC layer of the terminal; when the terminal uses the T-bit uplink grant information, the MAC layer indicates the T-bit uplink grant information to a physical layer; and a physical layer resource to which the T-bit uplink grant information is mapped and a resource configured by the third configured uplink grant information constitute the resource configured by the first configured uplink grant information.

Optionally, in a case that the first configured uplink grant information is sent by using the first message or the random access response message, the resource configuration apparatus 60 further includes:

a second receiving module, configured to receive a second cell handover command sent by the source cell, where the second cell handover command includes an identifier of the target cell; and

the first sending module 62 is specifically configured to: determine configured uplink grant information of the target cell according to the identifier of the target cell and the first configured uplink grant information, and sending the uplink message to the target cell during the handover procedure by using the configured uplink grant information of the target cell.

Optionally, the resource configuration apparatus 60 further includes:

a third receiving module, configured to: receive fourth configured uplink grant information of the candidate cell before performing the procedure of early TA acquisition of the candidate cell, where the fourth configured uplink grant information includes at least one of the following:

a candidate cell identifier;
frequency hopping configuration information;
a quantity of repetitions of a common configuration parameter;
a repeated redundancy version;
a power control parameter;
a quantity of HARQ processes configured in the fourth configured uplink grant information;
a transmission period of a CG corresponding to the fourth configured uplink grant information; and
second indication information, used to indicate that the fourth configured uplink grant information or the CG corresponding to the fourth configured uplink grant information is used for first uplink data transmission in a RACH-less LTM procedure.

Optionally, the first sending module 62 is specifically configured to perform any one of the following:

determining a first uplink resource based on the first configured uplink grant information and the fourth configured uplink grant information that are associated with the target cell, and sending the uplink message to the target cell on the first uplink resource during the handover procedure; and

determining a second uplink resource based on the fourth configured uplink grant information associated with the target cell, and sending the uplink message to the target cell on the second uplink resource during the handover procedure.

Optionally, the first execution module 63 is configured to:
determine a CG resource associated with the first configured uplink grant information of the candidate cell, and release the CG resource associated with the first configured uplink grant information of the candidate cell.

Optionally, the first receiving module 61 is specifically configured to:
receive the first configured uplink grant information of the candidate cell before performing a procedure of early TA acquisition of the candidate cell, where the first configured uplink grant information includes at least one of the following:

a candidate cell identifier;
frequency hopping configuration information;
a quantity of repetitions of a common configuration parameter;
a repeated redundancy version;
a power control parameter;
a quantity of HARQ processes configured in the first configured uplink grant information;
a transmission period of a CG corresponding to the first configured uplink grant information;
a time domain resource;
a frequency domain resource;
a modulation and coding scheme MCS;
a size of a TB;
an antenna port;
an SRS resource indication;
a DMRS resource indication;
a precoding matrix indicator;
a transmit power control TPC command;
first indication information, used to indicate that the first configured uplink grant information or the CG corresponding to the first configured uplink grant information is used for first uplink data transmission in a random access channel-less RACH-less LTM procedure; and
third indication information, used to indicate whether a CG resource of the candidate cell is activated.

Optionally, in the terminal according to the first configured uplink grant information, the resource configuration apparatus 60 further includes:
a fourth receiving module, configured to: before sending the uplink message to the target cell during the handover procedure, perform at least one of the following:

receiving first activation information, where the first activation information includes an identifier of a first candidate cell and fourth indication information, the fourth indication information is used to indicate that a first CG resource is activated, and the first CG resource is a CG resource related to first uplink data transmission in a RACH-less LTM procedure of the first candidate cell;
receiving a third cell handover command sent by a source cell, where the third cell handover command includes an identifier of the target cell and fifth indication information, the fifth indication information is used to indicate that a second CG resource is activated, and the second CG resource is a CG resource related to first uplink data transmission in a RACH-less LTM procedure of the target cell; and
receiving a random access response message sent by the source cell or the candidate cell, where the random access response message is a response message in the procedure of early TA acquisition of the candidate cell, the random access response message includes an identifier of a second candidate cell and sixth indication information, the sixth indication information is used to indicate that a third CG resource is activated, and the third CG resource is a CG resource related to first uplink data transmission in a RACH-less LTM procedure of the second candidate cell.

Optionally, the first activation information is carried by at least one of the following: an RRC reconfiguration message, a medium access control control element MAC CE, and a physical downlink control channel PDCCH.

Optionally, in a case that the first activation information or the random access response message is received, the resource configuration apparatus 60 further includes:

a fifth receiving module, configured to receive a fourth cell handover command sent by the source cell, where the fourth cell handover command includes the identifier of the target cell; and

the first sending module 62 is specifically configured to: determine configured uplink grant information of the target cell according to the identifier of the target cell and the first configured uplink grant information, and sending the uplink message to the target cell during the handover procedure by using the configured uplink grant information of the target cell.

Optionally, in a case that the first activation information is received, the first execution module 63 is specifically configured to: determine that the first CG resource is deactivated; or

in a case that the third cell handover command is received, the first execution module 63 is specifically configured to: determine that the second CG resource is deactivated; or

in a case that the random access response message is received, the first execution module 63 is specifically configured to: determine that the third CG resource is deactivated.

Optionally, in a case that the first activation information is received, when a CG resource configured by the first candidate cell does not include the first CG resource, the first execution module 63 is further configured to ignore the fourth indication information; or

in a case that the third cell handover command is received, when a CG resource configured by the target cell does not include the second CG resource, the first execution module 63 is further configured to ignore the fifth indication information; or

in a case that the random access response message is received, when a CG resource configured by the second candidate cell does not include the third CG resource, the first execution module 63 is further configured to ignore the sixth indication information.

Optionally, the first sending module 62 is specifically configured to: determine a third uplink resource based on the first configured uplink grant information associated with the target cell, and send the uplink message to the target cell on the third uplink resource during the handover procedure.

Optionally, the first configured uplink grant information includes at least one of the following: a common C-RNTI and a temporary C-RNTI; and the uplink message is scrambled by using the common C-RNTI or the temporary C-RNTI; or the uplink message is scrambled by using a C-RNTI of the terminal.

Optionally, a CG resource configured by the first configured uplink grant information is related to a beam used in the procedure of early TA acquisition of the candidate cell; or

the first configured uplink grant information configures a plurality of CG resources, where each CG resource is related to one or more beams, or one or more CG resources are related to one beam.

The resource configuration apparatus 60 in the foregoing embodiments of this application may be an electronic device, for example, an electronic device with an operating system, or may be a component such as an integrated circuit or a chip in an electronic device. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The resource configuration apparatus 60 provided in the embodiments of this application can implement various procedures implemented in the method embodiment of FIG. 2, and achieve the same technical effects. To avoid repetition, details are not described herein again.

Referring to FIG. 7, FIG. 7 is a schematic diagram of a structure of a resource configuration apparatus according to an embodiment of this application. The apparatus is applied to a first network side device, and the first network side device is a network side device of a candidate cell related to LTM. As shown in FIG. 7, a resource configuration apparatus 70 includes:

a second sending module 71, configured to send fifth configured uplink grant information to a second network side device, where the fifth configured uplink grant information is configured and sent before a procedure of early TA acquisition of a candidate cell is performed, or the fifth configured uplink grant information is configured and sent during or after a procedure of early TA acquisition of a candidate cell is performed, the fifth configured uplink grant information is configured by a first network side device for a terminal, and the second network side device is a network side device of a source cell;

a sixth receiving module 72, configured to receive seventh indication information, where the seventh indication information is used to indicate the first network side device to release or deactivate a CG resource that is configured by the first network side device and that is associated with RACH-less LTM; and

a second execution module 73, configured to release or deactivate the CG resource according to the seventh indication information.

Optionally, the seventh indication information includes an identifier of a first terminal, and the seventh indication information is used to indicate the first network side device to release or deactivate a CG resource that is configured for the first terminal and that is associated with RACH-less LTM; or

the seventh indication information includes CG-related information, and the seventh indication information is used to indicate the first network side device to release or deactivate a CG resource associated with the CG-related information.

Optionally, the fifth configured uplink grant information includes at least one of the following:

a terminal identifier;
a resource or a resource identifier associated with the procedure of early TA acquisition of the candidate cell;
a candidate cell identifier;
frequency hopping configuration information;
a quantity of repetitions of a common configuration parameter;
a repeated redundancy version;
a power control parameter;
a quantity of HARQ processes configured in the fifth configured uplink grant information;
a transmission period of a CG corresponding to the fifth configured uplink grant information;
a time domain resource;
a frequency domain resource;
a modulation and coding scheme MCS;
a size of a transport block TB;
an antenna port;
a sounding reference signal SRS resource indication;
a demodulation reference signal DMRS resource indication;
a precoding matrix indicator;
a transmit power control TPC command;
a common cell radio network temporary identifier C-RNTI or a temporary C-RNTI;
eighth indication information, used to indicate that the fifth configured uplink grant information or the CG corresponding to the fifth configured uplink grant information is used for first uplink data transmission in a random access channel-less RACH-less LTM procedure; and
ninth indication information, used to indicate whether a CG resource of the candidate cell is activated.

Optionally, the resource configuration apparatus 70 further includes:
a third sending module, configured to send second activation information to the second network side device, where the second activation information is configured and sent during the procedure of early TA acquisition of the candidate cell; or the second activation information is configured and sent after the procedure of early TA acquisition of the candidate cell is completed; and the second activation information includes at least one of the following: an identifier of a third candidate cell, tenth indication information, a terminal identifier, a resource associated with the procedure of early TA acquisition of the candidate cell, and a resource identifier associated with the procedure of early TA acquisition of the candidate cell, the tenth indication information is used to indicate that a fourth CG resource is activated, and the fourth CG resource is a CG resource that is configured by the third candidate cell for the terminal and that is related to first uplink data transmission in the RACH-less LTM procedure.

Optionally, when the second activation information is sent to the second network side device, in a case that the LTM belongs to intra-centralized unit intra-CU LTM, a first target DU sends the second activation information to a first CU, and the first CU sends the second activation information to a first source DU, where the first target DU is a DU of the first network side device, the first CU is a CU shared by the first network side device and the second network side device, and the first source DU is a DU of the second network side device; or

in a case that the LTM belongs to inter-centralized unit inter-CU LTM, a second target DU sends the second activation information to a first target CU, and the first target CU sends the second activation information to a first source CU, so that the first source CU sends the second activation information to a second source DU, where the second target DU and the first target CU are respectively a DU and a CU of the first network side device, and the first source CU and the second source DU are respectively a CU and a DU of the second network side device.

Optionally, when the fifth configured uplink grant information is sent to the second network side device, in a case that the LTM belongs to the intra-CU LTM, a third target DU sends the fifth configured uplink grant information to a second CU, and the second CU sends the fifth configured uplink grant information to a third source DU, where the third target DU is a DU of the first network side device, the second CU is a CU shared by the first network side device and the second network side device, and the third source DU is a DU of the second network side device; or

in a case that the LTM belongs to the inter-CU LTM, a fourth target DU sends the fifth configured uplink grant information to a second target CU, and the second target CU sends the fifth configured uplink grant information to a second source CU, so that the second source CU sends the fifth configured uplink grant information to a fourth source DU, where the fourth target DU and the second target CU are respectively a DU and a CU of the first network side device, and the second source CU and the fourth source DU are respectively a CU and a DU of the second network side device.

Optionally, the resource configuration apparatus 70 further includes:

a monitoring module, configured to: determine a fourth uplink resource based on the fifth configured uplink grant information associated with the candidate cell, and monitor an uplink message of the terminal on the fourth uplink resource, where the uplink message is scrambled by using at least one of the following: a common C-RNTI, a temporary C-RNTI, and a C-RNTI.

Optionally, the monitoring module is specifically configured to:

monitor the uplink message of the terminal on the fourth uplink resource starting from a first moment, where the first moment is any one of the following:

a second moment, where the second moment is a moment at which the first network side device completes configuring the fifth configured uplink grant information or the second activation information;
a third moment, where the third moment is a moment at which the first network side device sends the fifth configured uplink grant information or the second activation information to the second network side device;
a fourth moment, where the fourth moment is a moment at which the first network side device completes sending a random access response message to the second network side device or the terminal, and the random access response message is a response message in the procedure of early TA acquisition of the candidate cell;
a moment acquired after first duration is added to the second moment;
a moment at which a first timer ends, where the first timer is started at the second moment;
a moment acquired after second duration is added to the third moment;
a moment at which a second timer ends, where the second timer is started at the third moment;
a moment acquired after third duration is added to the fourth moment; and
a moment at which a third timer ends, where the third timer is started at the fourth moment;
where the second activation information includes: an identifier of a third candidate cell, tenth indication information, a terminal identifier, a resource associated with the procedure of early TA acquisition of the candidate cell, and a resource identifier associated with the procedure of early TA acquisition of the candidate cell, the tenth indication information is used to indicate that a fourth CG resource is activated, and the fourth CG resource is a CG resource that is configured by the third candidate cell for the terminal and that is related to first uplink data transmission in the RACH-less LTM procedure.

Optionally, the monitoring module is further configured to stop monitoring the uplink message of the terminal on the fourth uplink resource.

Optionally, the sixth receiving module 72 is specifically configured to receive the seventh indication information sent by the second network side device or a third network side device, where the third network side device is a network side device of a target cell.

The resource configuration apparatus 70 provided in the embodiments of this application can implement various procedures implemented in the method embodiment of FIG. 3, and achieve the same technical effects. To avoid repetition, details are not described herein again.

Referring to FIG. 8, FIG. 8 is a schematic diagram of a structure of a resource configuration apparatus according to an embodiment of this application. The apparatus is applied to a second network side device, and the second network side device is a network side device of a source cell. As shown in FIG. 8, a resource configuration apparatus 80 includes:

a seventh receiving module 81, configured to receive fifth configured uplink grant information sent by a first network side device, where the fifth configured uplink grant information is configured and sent before a procedure of early TA acquisition of a candidate cell is performed, or the fifth configured uplink grant information is configured and sent during or after a procedure of early TA acquisition of a candidate cell is performed, the fifth configured uplink grant information is configured by the first network side device for a terminal, and the first network side device is a network side device of a candidate cell related to LTM; and

a fourth sending module 82, configured to send seventh indication information to the first network side device, where the seventh indication information is used to indicate the first network side device to release or deactivate a CG resource that is configured by the first network side device and that is associated with RACH-less LTM.

Optionally, the resource configuration apparatus 80 further includes:

a fifth sending module, configured to send first configured uplink grant information or first activation information to the terminal, where the first configured uplink grant information is used to configure a CG resource for the terminal, the first activation information includes an identifier of a first candidate cell and fourth indication information, the fourth indication information is used to indicate that a first CG resource is activated, and the first CG resource is a CG resource that is configured by the first candidate cell for the terminal and that is related to first uplink data transmission in a RACH-less LTM procedure.

Optionally, the seventh indication information includes an identifier of a first terminal, and the seventh indication information is used to indicate the first network side device to release or deactivate a CG resource that is configured for the first terminal and that is associated with RACH-less LTM;

the seventh indication information includes CG-related information, and the seventh indication information is used to indicate the first network side device to release or deactivate a CG resource associated with the CG-related information.

Optionally, the fifth configured uplink grant information includes at least one of the following:

a terminal identifier;
a resource or a resource identifier associated with the procedure of early TA acquisition of the candidate cell;
a candidate cell identifier;
frequency hopping configuration information;
a quantity of repetitions of a common configuration parameter;
a repeated redundancy version;
a power control parameter;
a quantity of HARQ processes configured in the first configured uplink grant information;
a transmission period of a CG corresponding to the first configured uplink grant information;
a time domain resource;
a frequency domain resource;
a modulation and coding scheme MCS;
a size of a transport block TB;
an antenna port;
a sounding reference signal SRS resource indication;
a demodulation reference signal DMRS resource indication;
a precoding matrix indicator;
a transmit power control TPC command;
a common C-RNTI or a temporary C-RNTI;
eighth indication information, used to indicate that the fifth configured uplink grant information or the CG corresponding to the fifth configured uplink grant information is used for first uplink data transmission in a random access channel-less RACH-less LTM procedure; and
ninth indication information, used to indicate whether a CG resource of the candidate cell is activated.

Optionally, the resource configuration apparatus 80 further includes:

an eighth receiving module, configured to receive second activation information sent by the first network side device, where the second activation information is configured and sent during the procedure of early TA acquisition of the candidate cell; or the second activation information is configured and sent after the procedure of early TA acquisition of the candidate cell is completed; and the second activation information includes at least one of the following: an identifier of a third candidate cell, tenth indication information, a terminal identifier, a resource associated with the procedure of early TA acquisition of the candidate cell, and a resource identifier associated with the procedure of early TA acquisition of the candidate cell, the tenth indication information is used to indicate that a fourth CG resource is activated, and the fourth CG resource is a CG resource that is configured by the third candidate cell for the terminal and that is related to first uplink data transmission in the RACH-less LTM procedure.

Optionally, when the seventh indication information is sent to the first network side device, in a case that the LTM belongs to intra-CU LTM, after determining that the terminal successfully accesses a target cell, a third CU sends the seventh indication information to a DU of a candidate cell configuring a CG resource, where the seventh indication information is used to indicate the candidate cell configuring the CG resource to release or deactivate a CG resource that is configured by the candidate cell and that is associated with RACH-less LTM; and the third CU is a CU shared by the second network side device and a network side device of the candidate cell configuring the CG resource; or

after determining that the terminal successfully accesses the target cell, a fourth CU sends the seventh indication information to DUs of all candidate cells, where the seventh indication information is used to indicate all the candidate cells to release or deactivate CG resources respectively configured by all the candidate cells; and the fourth CU is a CU shared by the second network side device and a network side device of the candidate cell.

Optionally, before sending the seventh indication information to the DU of the candidate cell configuring the CG resource, the third CU receives an identifier of the candidate cell configuring the CG resource.

Optionally, when the seventh indication information is sent to the first network side device, in a case that the LTM belongs to inter-CU LTM, a third source CU sends the seventh indication information to a CU of a candidate cell configuring a CG resource when a first condition is met, where the seventh indication information is used to indicate the candidate cell configuring the CG resource to release or deactivate the CG resource; or the third source CU sends the seventh indication information to CUs of all candidate cells when the first condition is met, where the seventh indication information is used to indicate all the candidate cells to release or deactivate CG resources respectively configured by all the candidate cells; where the first condition includes at least one of the following: receiving first notification information and sending, by a fifth source DU, a handover command to the terminal; the first notification information is used to indicate that the terminal successfully accesses the target cell; and the third source CU is a CU of the second network side device, and the fifth source DU is a DU of the second network side device.

Optionally, before sending the seventh indication information to the CU of the candidate cell configuring the CG resource, the third source CU receives an identifier that is of the candidate cell configuring the CG resource and that is sent by the fifth source DU.

The resource configuration apparatus 80 provided in the embodiments of this application can implement various procedures implemented in the method embodiment of FIG. 4, and achieve the same technical effects. To avoid repetition, details are not described herein again.

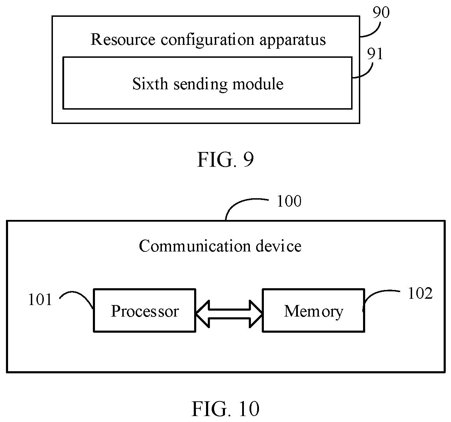

Referring to FIG. 9, FIG. 9 is a schematic diagram of a structure of a resource configuration apparatus according to an embodiment of this application. The apparatus is applied to a third network side device, and the third network side device is a network side device of a target cell. As shown in FIG. 9, a resource configuration apparatus 90 includes:

a sixth sending module 91, configured to send seventh indication information to a first network side device, where the seventh indication information is used to indicate the first network side device to release or deactivate a CG resource that is configured by the first network side device and that is associated with RACH-less LTM, and the first network side device is a network side device of another candidate cell different from a target cell in an LTM procedure.

Optionally, when the seventh indication information is sent to the first network side device, in a case that the LTM belongs to intra-CU LTM, after determining that the terminal successfully accesses a target cell, a fourth CU sends the seventh indication information to a DU of a candidate cell configuring a CG resource, where the seventh indication information is used to indicate the candidate cell configuring the CG resource to release or deactivate a CG resource that is configured by the candidate cell and that is associated with RACH-less LTM; and the fourth CU is a CU shared by the third network side device and a network side device of the candidate cell configuring the CG resource; or

after determining that the terminal successfully accesses the target cell, a fifth CU sends the seventh indication information to DUs of all candidate cells, where the seventh indication information is used to indicate all the candidate cells to release or deactivate CG resources respectively configured by all the candidate cells; and the fifth CU is a CU shared by the third network side device and a network side device of the candidate cell.

Optionally, before sending the seventh indication information to the DU of the candidate cell configuring the CG resource, the fourth CU receives an identifier of the candidate cell configuring the CG resource.

Optionally, when the seventh indication information is sent to the first network side device, in a case that the LTM belongs to inter-CU LTM, in a case of receiving second notification information, a sixth CU sends the seventh indication information to a CU of a candidate cell configuring a CG, where the seventh indication information is used to indicate the candidate cell configuring the CG resource to release or deactivate the CG resource; or in a case of receiving the second notification information, the sixth CU sends the seventh indication information to CUs of all candidate cells, where the seventh indication information is used to indicate all the candidate cells to release or deactivate CG resources respectively configured by all the candidate cells; where the sixth CU is a CU of the third network side device, and the second notification information is used to notify that the terminal successfully accesses the target cell.

Optionally, before sending the seventh indication information to the CU of the candidate cell configuring the CG resource, the sixth CU receives an identifier that is of the candidate cell configuring the CG resource and that is sent by a fourth source CU, where the fourth source CU is a CU of the second network side device of the source cell.

The resource configuration apparatus 90 provided in the embodiments of this application can implement various procedures implemented in the method embodiment of FIG. 5, and achieve the same technical effects. To avoid repetition, details are not described herein again.

As shown in FIG. 10, an embodiment of this application further provides a communication device 100, including a processor 101 and a memory 102. The memory 102 stores a program or instructions capable of running on the processor 101. For example, when the communication device 100 is a terminal, the program or the instructions are executed by the processor 101 to implement the steps in the foregoing embodiment of the resource configuration method shown in FIG. 2, and the same technical effects can be achieved. When the communication device 100 is a network side device, the program or the instructions are executed by the processor 101 to implement the steps in the foregoing embodiments of the resource configuration method shown in FIG. 3, FIG. 4, or FIG. 5, and same technical effects can be achieved. To avoid repetition, details are not described herein again.

An embodiment of this application further provides a terminal, including a processor and a communication interface. The communication interface is coupled to the processor. The processor is configured to run a program or instructions to implement the steps in the method embodiment shown in FIG. 2. The terminal embodiment corresponds to the foregoing terminal-side method embodiment. Each implementation process and implementation of the foregoing method embodiment may be applied to the terminal embodiment, and same technical effects can be achieved.

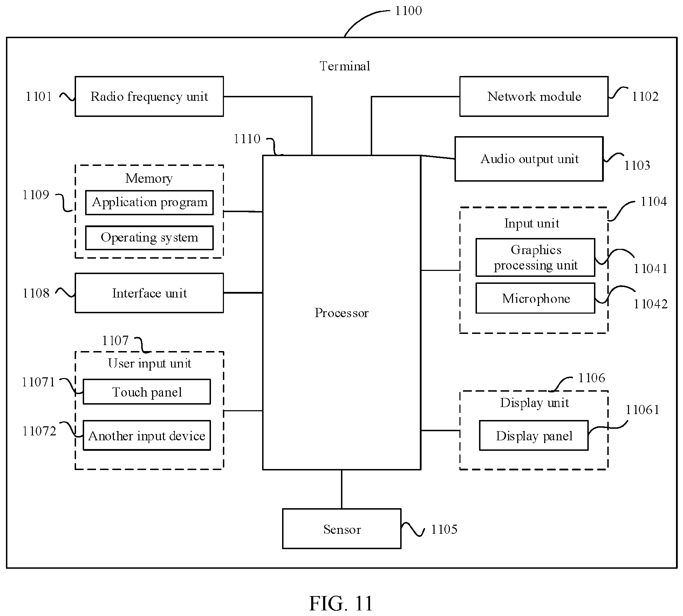

Specifically, FIG. 11 is a schematic diagram of a hardware structure of a terminal for implementing an embodiment of this application.

A terminal 1100 includes but is not limited to at least some components in a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (for example, a battery) that supplies power to each component. The power supply may be logically connected to the processor 1110 by using a power management system, to implement functions such as charging management, discharging management, and power consumption management through the power management system. The structure of the terminal shown in FIG. 11 does not constitute a limitation on the terminal. The terminal may include more or fewer components than those shown in the figure, or combine some components, or have different component arrangements. Details are not described herein again.

It should be understood that in this embodiment of this application, the input unit 1104 may include a graphics processing unit (Graphics Processing Unit, GPU) 11041 and a microphone 11042. The graphics processing unit 11041 processes image data of a still picture or a video acquired by an image capture apparatus (for example, a camera) in a video capture mode or an image capture mode. The display unit 1106 may include a display panel 11061, and the display panel 11061 may be configured in a form of a liquid crystal display, an organic light-emitting diode, or the like. The user input unit 1107 includes at least one of a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 1101 may transmit the downlink data to the processor 1110 for processing. In addition, the radio frequency unit 1101 may send uplink data to the network side device. Generally, the radio frequency unit 1101 includes but is not limited to an antenna, an amplifier, a transceiver, a coupler, a low-noise amplifier, a duplexer, and the like.

The memory 1109 may be configured to store a software program or instructions and various types of data. The memory 1109 may mainly include a first storage area for storing a program or instructions and a second storage area for storing data. The first storage area may store an operating system, an application program or instructions required by at least one function (for example, a sound play function or an image play function), and the like. In addition, the memory 1109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1109 in this embodiment of this application includes but is not limited to these memories and any other suitable type of memory.

The processor 1110 may include one or more processing units. Optionally, the processor 1110 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor cannot be integrated into the processor 1110.

The radio frequency unit 1101 is configured to receive first configured uplink grant information of a candidate cell used in an LTM procedure; and send an uplink message to a target cell during a handover procedure according to the first configured uplink grant information.

The processor 1110 is configured to: release or deactivate the first configured uplink grant information of the candidate cell after a handover is successfully completed.

It may be understood that for implementation processes of the implementations mentioned in this embodiment, refer to related descriptions in the method embodiment, and a same or corresponding technical effect is achieved. To avoid repetition, details are not described herein again.

An embodiment of this application further provides a network side device, including a processor and a communication interface. The communication interface is coupled to the processor. The processor is configured to run a program or instructions to implement the steps in the method embodiment shown in FIG. 3, FIG. 4, or FIG. 5. The network side device embodiment corresponds to the foregoing method embodiment for the network side device. Each implementation process and implementation of the foregoing method embodiment may be applied to the network side device embodiment, and the same technical effects can be achieved.

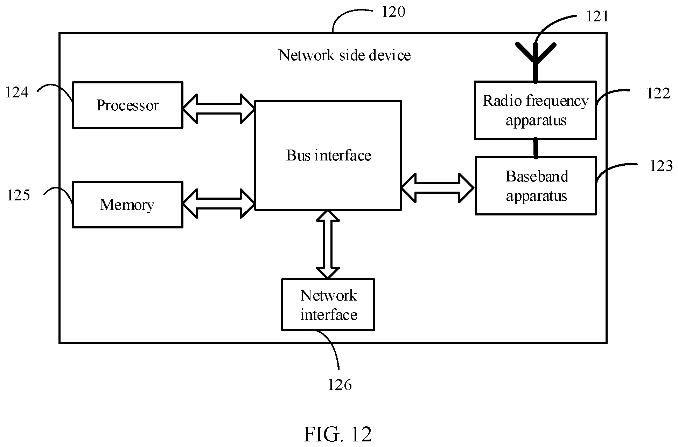

Specifically, an embodiment of this application further provides a network side device. As shown in FIG. 12, the network side device 120 includes an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes to-be-sent information, and sends processed information to the radio frequency apparatus 122. After processing the received information, the radio frequency apparatus 122 sends processed information by using the antenna 121.

The method performed by the network side device in the foregoing embodiment may be implemented in the baseband apparatus 123. The baseband apparatus 123 includes a baseband processor.

For example, the baseband apparatus 123 may include at least one baseband board. A plurality of chips are disposed on the baseband board. As shown in FIG. 12, one of the chips is, for example, the baseband processor, and is connected to the memory 125 by using a bus interface, to invoke a program in the memory 125 to perform an operation of a network device shown in the foregoing method embodiment.

The network side device may further include a network interface 126, and the interface is, for example, a common public radio interface (Common Public Radio Interface, CPRI).

Specifically, the network side device 120 in this embodiment of this application further includes instructions or a program stored in the memory 125 and capable of running on the processor 124. The processor 124 invokes the instructions or the program in the memory 125 to perform the method performed by the modules shown in FIG. 7, FIG. 8, or FIG. 9, and same technical effects are achieved. To avoid repetition, details are not described herein again.

An embodiment of this application further provides a readable storage medium. The readable storage medium stores a program or instructions. When the program or the instructions are executed by a processor, processes in the foregoing embodiments of the resource configuration method are implemented, and the same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement processes in the foregoing embodiments of the resource configuration method, and the same technical effects can be achieved. To avoid repetition, details are not described herein again.

It should be understood that the chip mentioned in this embodiment of this application can also be referred to as a system-level chip, a system chip, a chip system, a system on chip, or the like.

An embodiment of this application further provides a computer program/program product. The computer program/program product is stored in a storage medium. The computer program/program product is executed by at least one processor to implement processes in the foregoing embodiments of the resource configuration method, and the same technical effects can be achieved. To avoid repetition, details are not described herein again.

An embodiment of this application further provides a communication system, including one of a terminal, a second network side device, a first network side device, and a third network side device. The terminal may be configured to perform the steps of the method shown in FIG. 2. The network side device is a network side device of a candidate cell, and may be configured to perform the steps of the method shown in FIG. 3. The second network side device is a network side device of a source cell, and may be configured to perform the steps of the method shown in FIG. 4. The third network side device is a network side device of a target cell, and may be configured to perform the steps of the method shown in FIG. 5.

It should be noted that in this specification, the term "include", "comprise", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

**Claims**

1. A resource configuration method, comprising:

   receiving, by a terminal, first configured uplink grant information of a candidate cell used in a layer 1 or layer 2 triggered mobility LTM procedure;
   sending, by the terminal, an uplink message to a target cell during a handover procedure according to the first configured uplink grant information; and
   releasing or deactivating, by the terminal, the first configured uplink grant information of the candidate cell after a handover is successfully completed.

2. The method according to claim 1, wherein the receiving, by a terminal, first configured uplink grant information of a candidate cell used in a layer 1 or layer 2 triggered mobility LTM procedure comprises at least one of the following:

   after performing a procedure of early timing advance TA acquisition of the candidate cell, receiving, by the terminal, a first message sent by a source cell, wherein the first message comprises the first configured uplink grant information;
   receiving, by the terminal, a first cell handover command sent by the source cell, wherein the first cell handover command comprises the first configured uplink grant information, and the candidate cell is the target cell; and
   receiving, by the terminal in the procedure of early TA acquisition of the candidate cell, a random access response message sent by the source cell or the candidate cell, wherein the random access response message comprises the first configured uplink grant information.

3. The method according to claim 1 or 2, wherein the first configured uplink grant information comprises at least one of the following:

   a candidate cell identifier;
   frequency hopping configuration information;
   a quantity of repetitions of a common configuration parameter;
   a repeated redundancy version;
   a power control parameter;
   a quantity of hybrid automatic repeat request HARQ processes configured in the first configured uplink grant information;
   a transmission period of a configured grant CG corresponding to the first configured uplink grant information;
   a time domain resource;
   a frequency domain resource;
   a modulation and coding scheme MCS;
   a size of a transport block TB;

an antenna port;

a sounding reference signal SRS resource indication;

a demodulation reference signal DMRS resource indication;

a precoding matrix indicator;

a transmit power control TPC command; and

first indication information, used to indicate that the first configured uplink grant information or the CG corresponding to the first configured uplink grant information is used for first uplink data transmission in a random access channel-less RACH-less LTM procedure.

4. The method according to claim 2 or 3, wherein in a case that the first configured uplink grant information is sent by using the first message, the first configured uplink grant information meets at least one of the following:

the first configured uplink grant information comprises N-bit uplink grant information, N is an integer greater than 0, and the N-bit uplink grant information is transparent to a radio resource control RRC layer of the terminal; wherein when the terminal uses the N-bit uplink grant information, the RRC layer indicates the N-bit uplink grant information to a physical layer; and a physical layer resource to which the N-bit uplink grant information is mapped is a resource configured by the first configured uplink grant information; and

the first configured uplink grant information comprises second configured uplink grant information and M-bit uplink grant information, M is an integer greater than 0, and the M-bit uplink grant information is transparent to the RRC layer of the terminal; wherein when the terminal uses the M-bit uplink grant information, the RRC layer indicates the M-bit uplink grant information to the physical layer; and a physical layer resource to which the M-bit uplink grant information is mapped and a resource configured by the second configured uplink grant information constitute the resource configured by the first configured uplink grant information.

5. The method according to claim 2 or 3, wherein in a case that the first configured uplink grant information is sent by using the first cell handover command or the random access response message, the first configured uplink grant information meets at least one of the following:

the first configured uplink grant information comprises S-bit uplink grant information, S is an integer greater than 0, and the S-bit uplink grant information is transparent to a medium access control MAC layer of the terminal; wherein when the terminal uses the S-bit uplink grant information, the MAC layer indicates the S-bit uplink grant information to a physical layer; and a physical layer resource to which the S-bit uplink grant information is mapped is a resource configured by the first configured uplink grant information; and

the first configured uplink grant information comprises third configured uplink grant information and T-bit uplink grant information, T is an integer greater than 0, and the T-bit uplink grant information is transparent to the MAC layer of the terminal; wherein when the terminal uses the T-bit uplink grant information, the MAC layer indicates the T-bit uplink grant information to a physical layer; and a physical layer resource to which the T-bit uplink grant information is mapped and a resource configured by the third configured uplink grant information constitute the resource configured by the first configured uplink grant information.

6. The method according to claim 2 or 3, wherein in a case that the first configured uplink grant information is sent by using the first message or the random access response message, the sending, by the terminal, an uplink message to a target cell during a handover procedure according to the first configured uplink grant information comprises:

receiving, by the terminal, a second cell handover command sent by the source cell, wherein the second cell handover command comprises an identifier of the target cell; and

determining, by the terminal, configured uplink grant information of the target cell according to the identifier of the target cell and the first configured uplink grant information, and sending the uplink message to the target cell during the handover procedure by using the configured uplink grant information of the target cell.

7. The method according to any one of claims 1 to 6, wherein the method further comprises:

receiving, by the terminal, fourth configured uplink grant information of the candidate cell before performing the procedure of early TA acquisition of the candidate cell, wherein the fourth configured uplink grant information comprises at least one of the following:

a candidate cell identifier;

frequency hopping configuration information;

a quantity of repetitions of a common configuration parameter;

a repeated redundancy version;
a power control parameter;
a quantity of HARQ processes configured in the fourth configured uplink grant information;
a transmission period of a CG corresponding to the fourth configured uplink grant information; and
second indication information, used to indicate that the fourth configured uplink grant information or the CG corresponding to the fourth configured uplink grant information is used for first uplink data transmission in a RACH-less LTM procedure.

8. The method according to claim 7, wherein the sending an uplink message to a target cell during a handover procedure comprises any one of the following:

determining, by the terminal, a first uplink resource based on the first configured uplink grant information and the fourth configured uplink grant information that are associated with the target cell, and sending the uplink message to the target cell on the first uplink resource during the handover procedure; and
determining, by the terminal, a second uplink resource based on the fourth configured uplink grant information associated with the target cell, and sending the uplink message to the target cell on the second uplink resource during the handover procedure.

9. The method according to any one of claims 1 to 8, wherein the releasing or deactivating the first configured uplink grant information of the candidate cell comprises:
determining, by the terminal, a CG resource associated with the first configured uplink grant information of the candidate cell, and releasing the CG resource associated with the first configured uplink grant information of the candidate cell.

10. The method according to claim 1, wherein the receiving, by a terminal, first configured uplink grant information of a candidate cell used in a layer 1 or layer 2 triggered mobility LTM procedure comprises:
receiving, by the terminal, the first configured uplink grant information of the candidate cell before performing a procedure of early TA acquisition of the candidate cell, wherein the first configured uplink grant information comprises at least one of the following:

a candidate cell identifier;
frequency hopping configuration information;
a quantity of repetitions of a common configuration parameter;
a repeated redundancy version;
a power control parameter;
a quantity of HARQ processes configured in the first configured uplink grant information;
a transmission period of a CG corresponding to the first configured uplink grant information;
a time domain resource;
a frequency domain resource;
a modulation and coding scheme MCS;
a size of a TB;
an antenna port;
an SRS resource indication;
a DMRS resource indication;
a precoding matrix indicator;
a transmit power control TPC command;
first indication information, used to indicate that the first configured uplink grant information or the CG corresponding to the first configured uplink grant information is used for first uplink data transmission in a random access channel-less RACH-less LTM procedure; and
third indication information, used to indicate whether a CG resource of the candidate cell is activated.

11. The method according to claim 10, wherein before the sending, by the terminal, an uplink message to a target cell during a handover procedure according to the first configured uplink grant information, the method further comprises at least one of the following:

receiving, by the terminal, first activation information, wherein the first activation information comprises an identifier of a first candidate cell and fourth indication information, the fourth indication information is used to indicate that a first CG resource is activated, and the first CG resource is a CG resource related to first uplink data transmission in a RACH-less LTM procedure of the first candidate cell;

receiving, by the terminal, a third cell handover command sent by a source cell, wherein the third cell handover command comprises an identifier of the target cell and fifth indication information, the fifth indication information is used to indicate that a second CG resource is activated, and the second CG resource is a CG resource related to first uplink data transmission in a RACH-less LTM procedure of the target cell; and

receiving, by the terminal, a random access response message sent by the source cell or the candidate cell, wherein the random access response message is a response message in the procedure of early TA acquisition of the candidate cell, the random access response message comprises an identifier of a second candidate cell and sixth indication information, the sixth indication information is used to indicate that a third CG resource is activated, and the third CG resource is a CG resource related to first uplink data transmission in a RACH-less LTM procedure of the second candidate cell.

12. The method according to claim 11, wherein the first activation information is carried by at least one of the following: an RRC reconfiguration message, a medium access control control element MAC CE, and a physical downlink control channel PDCCH.

13. The method according to claim 11 or 12, wherein in a case that the first activation information or the random access response message is received, the sending, by the terminal, an uplink message to a target cell during a handover procedure according to the first configured uplink grant information comprises:

receiving, by the terminal, a fourth cell handover command sent by the source cell, wherein the fourth cell handover command comprises the identifier of the target cell; and

determining, by the terminal, configured uplink grant information of the target cell according to the identifier of the target cell and the first configured uplink grant information, and sending the uplink message to the target cell during the handover procedure by using the configured uplink grant information of the target cell.

14. The method according to any one of claims 11 to 13, wherein

in a case that the first activation information is received, the releasing or deactivating the first configured uplink grant information of the candidate cell comprises: determining, by the terminal, that the first CG resource is deactivated;

or

in a case that the third cell handover command is received, the releasing or deactivating the first configured uplink grant information of the candidate cell comprises: determining, by the terminal, that the second CG resource is deactivated;

or

in a case that the random access response message is received, the releasing or deactivating the first configured uplink grant information of the candidate cell comprises: determining, by the terminal, that the third CG resource is deactivated.

15. The method according to any one of claims 11 to 13, wherein in a case that the first activation information is received, when a CG resource configured by the first candidate cell does not comprise the first CG resource, the terminal ignores the fourth indication information;

or

in a case that the third cell handover command is received, when a CG resource configured by the target cell does not comprise the second CG resource, the terminal ignores the fifth indication information;

or

in a case that the random access response message is received, when a CG resource configured by the second candidate cell does not comprise the third CG resource, the terminal ignores the sixth indication information.

16. The method according to any one of claims 1 to 15, wherein the sending an uplink message to a target cell during a handover procedure comprises:

determining, by the terminal, a third uplink resource based on the first configured uplink grant information associated with the target cell, and sending the uplink message to the target cell on the third uplink resource during the handover procedure.

17. The method according to any one of claims 1 to 16, wherein the first configured uplink grant information comprises at least one of the following: a common cell radio network temporary identifier C-RNTI and a temporary C-RNTI; and the uplink message is scrambled by using the common C-RNTI or the temporary C-RNTI;

or

the uplink message is scrambled by using a C-RNTI of the terminal.

18. The method according to any one of claims 1 to 17, wherein a CG resource configured by the first configured uplink grant information is related to a beam used in the procedure of early TA acquisition of the candidate cell;

or

the first configured uplink grant information configures a plurality of CG resources, wherein each CG resource is related to one or more beams, or one or more CG resources are related to one beam.

19. A resource configuration method, comprising:

sending, by a first network side device, fifth configured uplink grant information to a second network side device, wherein the fifth configured uplink grant information is configured and sent before a procedure of early TA acquisition of a candidate cell is performed, or the fifth configured uplink grant information is configured and sent during or after a procedure of early TA acquisition of a candidate cell is performed, wherein the fifth configured uplink grant information is configured by the first network side device for a terminal, the first network side device is a network side device of a candidate cell related to LTM, and the second network side device is a network side device of a source cell;

receiving, by the first network side device, seventh indication information, wherein the seventh indication information is used to indicate the first network side device to release or deactivate a CG resource that is configured by the first network side device and that is associated with RACH-less LTM; and

releasing or deactivating, by the first network side device, the CG resource according to the seventh indication information.

20. The method according to claim 19, wherein the seventh indication information comprises an identifier of a first terminal, and the seventh indication information is used to indicate the first network side device to release or deactivate a CG resource that is configured for the first terminal and that is associated with RACH-less LTM;

or

the seventh indication information comprises CG-related information, and the seventh indication information is used to indicate the first network side device to release or deactivate a CG resource associated with the CG-related information.

21. The method according to claim 19 or 20, wherein the fifth configured uplink grant information comprises at least one of the following:

a terminal identifier;

a resource or a resource identifier associated with the procedure of early TA acquisition of the candidate cell;

a candidate cell identifier;

frequency hopping configuration information;

a quantity of repetitions of a common configuration parameter;

a repeated redundancy version;

a power control parameter;

a quantity of HARQ processes configured in the fifth configured uplink grant information;

a transmission period of a CG corresponding to the fifth configured uplink grant information;

a time domain resource;

a frequency domain resource;

a modulation and coding scheme MCS;

a size of a transport block TB;

an antenna port;

a sounding reference signal SRS resource indication;

a demodulation reference signal DMRS resource indication;

a precoding matrix indicator;

a transmit power control TPC command;

a common cell radio network temporary identifier C-RNTI or a temporary C-RNTI;

eighth indication information, used to indicate that the fifth configured uplink grant information or the CG corresponding to the fifth configured uplink grant information is used for first uplink data transmission in a random access channel-less RACH-less LTM procedure; and

ninth indication information, used to indicate whether a CG resource of the candidate cell is activated.

22. The method according to any one of claims 19 to 21, wherein the method further comprises:

sending, by the first network side device, second activation information to the second network side device; wherein the second activation information is configured and sent during the procedure of early TA acquisition of the candidate cell; or the second activation information is configured and sent after the procedure of early TA acquisition of the candidate cell is completed; wherein the second activation information comprises at least one of the following: an identifier of a third candidate cell, tenth indication information, a terminal identifier, a resource associated with the procedure of early TA acquisition of the candidate cell, and a resource identifier associated with the procedure of early TA acquisition of the candidate cell, the tenth indication information is used to indicate that a fourth CG resource is activated, and the fourth CG resource is a CG resource that is configured by the third candidate cell for the terminal and that is related to first uplink data transmission in the RACH-less LTM procedure.

23. The method according to claim 22, wherein the sending, by the first network side device, second activation information to the second network side device comprises at least one of the following:

in a case that the LTM belongs to intra-centralized unit intra-CU LTM, a first target distributed unit DU sending the second activation information to a first centralized unit CU, and the first CU sending the second activation information to a first source DU, wherein the first target DU is a DU of the first network side device, the first CU is a CU shared by the first network side device and the second network side device, and the first source DU is a DU of the second network side device; and

in a case that the LTM belongs to inter-centralized unit inter-CU LTM, a second target DU sending the second activation information to a first target CU, and the first target CU sending the second activation information to a first source CU, so that the first source CU sends the second activation information to a second source DU, wherein the second target DU and the first target CU are respectively a DU and a CU of the first network side device, and the first source CU and the second source DU are respectively a CU and a DU of the second network side device.

24. The method according to any one of claims 19 to 23, wherein the sending, by a first network side device, fifth configured uplink grant information to a second network side device comprises at least one of the following:

in a case that the LTM belongs to the intra-CU LTM, a third target DU sending the fifth configured uplink grant information to a second CU, and the second CU sending the fifth configured uplink grant information to a third source DU, wherein the third target DU is a DU of the first network side device, the second CU is a CU shared by the first network side device and the second network side device, and the third source DU is a DU of the second network side device; and

in a case that the LTM belongs to the inter-CU LTM, a fourth target DU sending the fifth configured uplink grant information to a second target CU, and the second target CU sending the fifth configured uplink grant information to a second source CU, so that the second source CU sends the fifth configured uplink grant information to a fourth source DU, wherein the fourth target DU and the second target CU are respectively a DU and a CU of the first network side device, and the second source CU and the fourth source DU are respectively a CU and a DU of the second network side device.

25. The method according to any one of claims 19 to 24, wherein the method further comprises:
determining, by the first network side device, a fourth uplink resource based on the fifth configured uplink grant information associated with the candidate cell, and monitoring an uplink message of the terminal on the fourth uplink resource, wherein the uplink message is scrambled by using at least one of the following: a common C-RNTI, a temporary C-RNTI, and a C-RNTI.

26. The method according to claim 25, wherein the monitoring an uplink message of the terminal on the fourth uplink resource comprises:
monitoring, by the first network side device, the uplink message of the terminal on the fourth uplink resource starting from a first moment, wherein the first moment is any one of the following:

a second moment, wherein the second moment is a moment at which the first network side device completes configuring the fifth configured uplink grant information or the second activation information;
a third moment, wherein the third moment is a moment at which the first network side device sends the fifth configured uplink grant information or the second activation information to the second network side device;
a fourth moment, wherein the fourth moment is a moment at which the first network side device completes sending a random access response message to the second network side device or the terminal, and the random access response message is a response message in the procedure of early TA acquisition of the candidate cell;
a moment acquired after first duration is added to the second moment;
a moment at which a first timer ends, wherein the first timer is started at the second moment;
a moment acquired after second duration is added to the third moment;
a moment at which a second timer ends, wherein the second timer is started at the third moment;
a moment acquired after third duration is added to the fourth moment; and
a moment at which a third timer ends, wherein the third timer is started at the fourth moment;
wherein the second activation information comprises: an identifier of a third candidate cell, tenth indication information, a terminal identifier, a resource associated with the procedure of early TA acquisition of the candidate cell, and a resource identifier associated with the procedure of early TA acquisition of the candidate cell, the tenth indication information is used to indicate that a fourth CG resource is activated, and the fourth CG resource is a CG resource that is configured by the third candidate cell for the terminal and that is related to first uplink data transmission in the RACH-less LTM procedure.

27. The method according to claim 25 or 26, wherein the method further comprises:
stopping, by the first network side device, monitoring the uplink message of the terminal on the fourth uplink resource.

28. The method according to any one of claims 19 to 27, wherein the receiving, by the first network side device, seventh indication information comprises:
receiving, by the first network side device, the seventh indication information sent by the second network side device or a third network side device, wherein the third network side device is a network side device of a target cell.

29. A resource configuration method, comprising:

receiving, by a second network side device, fifth configured uplink grant information sent by a first network side device, wherein the fifth configured uplink grant information is configured and sent before a procedure of early TA acquisition of a candidate cell is performed, or the fifth configured uplink grant information is configured and sent during or after a procedure of early TA acquisition of a candidate cell is performed, wherein the fifth configured uplink grant information is configured by the first network side device for a terminal, the first network side device is a network side device of a candidate cell related to LTM, and the second network side device is a network side device of a source cell; and
sending, by the second network side device, seventh indication information to the first network side device, wherein the seventh indication information is used to indicate the first network side device to release or deactivate a CG resource that is configured by the first network side device and that is associated with RACH-less LTM.

30. The method according to claim 29, wherein the method further comprises:
sending, by the second network side device, first configured uplink grant information or first activation information to the terminal, wherein the first configured uplink grant information is used to configure a CG resource for the terminal, the first activation information comprises an identifier of a first candidate cell and fourth indication information, the fourth indication information is used to indicate that a first CG resource is activated, and the first CG resource is a CG resource that is configured by the first candidate cell for the terminal and that is related to first uplink data transmission in a RACH-less LTM procedure.

31. The method according to claim 29 or 30, wherein the seventh indication information comprises an identifier of a first terminal, and the seventh indication information is used to indicate the first network side device to release or deactivate a CG resource that is configured for the first terminal and that is associated with RACH-less LTM;
or
the seventh indication information comprises CG-related information, and the seventh indication information is used to indicate the first network side device to release or deactivate a CG resource associated with the CG-related information.

32. The method according to any one of claims 29 to 31, wherein the fifth configured uplink grant information comprises at least one of the following:

a terminal identifier;

a resource or a resource identifier associated with the procedure of early TA acquisition of the candidate cell;

a candidate cell identifier;

frequency hopping configuration information;

a quantity of repetitions of a common configuration parameter;

a repeated redundancy version;

a power control parameter;

a quantity of HARQ processes configured in the first configured uplink grant information;

a transmission period of a CG corresponding to the first configured uplink grant information;

a time domain resource;

a frequency domain resource;

a modulation and coding scheme MCS;

a size of a transport block TB;

an antenna port;

a sounding reference signal SRS resource indication;

a demodulation reference signal DMRS resource indication;

a precoding matrix indicator;

a transmit power control TPC command;

a common C-RNTI or a temporary C-RNTI;

eighth indication information, used to indicate that the fifth configured uplink grant information or the CG corresponding to the fifth configured uplink grant information is used for first uplink data transmission in a random access channel-less RACH-less LTM procedure; and

ninth indication information, used to indicate whether a CG resource of the candidate cell is activated.

33. The method according to any one of claims 29 to 32, wherein the method further comprises:
receiving, by the second network side device, second activation information sent by the first network side device, wherein the second activation information is configured and sent during the procedure of early TA acquisition of the candidate cell; or the second activation information is configured and sent after the procedure of early TA acquisition of the candidate cell is completed; and the second activation information comprises at least one of the following: an identifier of a third candidate cell, tenth indication information, a terminal identifier, a resource associated with the procedure of early TA acquisition of the candidate cell, and a resource identifier associated with the procedure of early TA acquisition of the candidate cell, the tenth indication information is used to indicate that a fourth CG resource is activated, and the fourth CG resource is a CG resource that is configured by the third candidate cell for the terminal and that is related to first uplink data transmission in the RACH-less LTM procedure.

34. The method according to any one of claims 29 to 33, wherein in a case that the LTM belongs to intra-CU LTM, the sending, by the second network side device, seventh indication information to the first network side device comprises any one of the following:

after determining that the terminal successfully accesses a target cell, sending, by a third CU, the seventh indication information to a DU of a candidate cell configuring a CG resource, wherein the seventh indication information is used to indicate the candidate cell configuring the CG resource to release or deactivate a CG resource that is configured by the candidate cell and that is associated with RACH-less LTM; and the third CU is a CU shared by the second network side device and a network side device of the candidate cell configuring the CG resource; and

after determining that the terminal successfully accesses the target cell, sending, by a fourth CU, the seventh indication information to DUs of all candidate cells, wherein the seventh indication information is used to indicate all the candidate cells to release or deactivate CG resources respectively configured by all the candidate cells; and the fourth CU is a CU shared by the second network side device and a network side device of the candidate cell.

35. The method according to claim 34, wherein before the sending the seventh indication information to a DU of a candidate cell configuring a CG resource, the method further comprises:
receiving, by the third CU, an identifier of the candidate cell configuring the CG resource.

36. The method according to any one of claims 29 to 33, wherein in a case that the LTM belongs to inter-CU LTM, the sending, by the second network side device, seventh indication information to the first network side device comprises any one of the following:

sending, by a third source CU, the seventh indication information to a CU of a candidate cell configuring a CG resource when a first condition is met, wherein the seventh indication information is used to indicate the candidate cell configuring the CG resource to release or deactivate the CG resource; and

sending, by the third source CU, the seventh indication information to CUs of all candidate cells when the first condition is met, wherein the seventh indication information is used to indicate all the candidate cells to release or deactivate CG resources respectively configured by all the candidate cells;

wherein the first condition comprises at least one of the following: receiving first notification information and sending, by a fifth source DU, a handover command to the terminal; the first notification information is used to indicate that the terminal successfully accesses the target cell; and the third source CU is a CU of the second network side device, and the fifth source DU is a DU of the second network side device.

37. The method according to claim 36, wherein before the sending the seventh indication information to a CU of a candidate cell configuring a CG resource, the method further comprises:
receiving, by the third source CU, an identifier that is of the candidate cell configuring the CG resource and that is sent by the fifth source DU.

38. A resource configuration method, comprising:
sending, by a third network side device, seventh indication information to a first network side device, wherein the seventh indication information is used to indicate the first network side device to release or deactivate a CG resource that is configured by the first network side device and that is associated with RACH-less LTM, the first network side device is a network side device of another candidate cell different from a target cell in an LTM procedure, and the third network side device is a network side device of the target cell.

39. The method according to claim 38, wherein in a case that the LTM belongs to intra-CU LTM, the sending, by a third network side device, seventh indication information to a first network side device comprises any one of the following:

after determining that a terminal successfully accesses the target cell, sending, by a fourth CU, the seventh indication information to a DU of a candidate cell configuring a CG resource, wherein the seventh indication information is used to indicate the candidate cell configuring the CG resource to release or deactivate a CG resource that is configured by the candidate cell and that is associated with RACH-less LTM; and the fourth CU is a CU shared by the third network side device and a network side device of the candidate cell configuring the CG resource; and

after determining that the terminal successfully accesses the target cell, sending, by a fifth CU, the seventh indication information to DUs of all candidate cells, wherein the seventh indication information is used to indicate all the candidate cells to release or deactivate CG resources respectively configured by all the candidate cells; and the fifth CU is a CU shared by the third network side device and a network side device of the candidate cell.

40. The method according to claim 39, wherein before the sending the seventh indication information to a DU of a candidate cell configuring a CG resource, the method further comprises:
receiving, by the fourth CU, an identifier of the candidate cell configuring the CG resource.

41. The method according to claim 38, wherein in a case that the LTM belongs to inter-CU LTM, the sending, by a third network side device, seventh indication information to a first network side device comprises any one of the following:

in a case of receiving second notification information, sending, by a sixth CU, the seventh indication information to a CU of a candidate cell configuring a CG, wherein the seventh indication information is used to indicate the candidate cell configuring the CG resource to release or deactivate the CG resource; and

in a case of receiving the second notification information, sending, by the sixth CU, the seventh indication information to CUs of all candidate cells, wherein the seventh indication information is used to indicate all the candidate cells to release or deactivate CG resources respectively configured by all the candidate cells;

wherein the sixth CU is a CU of the third network side device, and the second notification information is used to notify that the terminal successfully accesses the target cell.

42. The method according to claim 41, wherein before the sending the seventh indication information to a CU of a candidate cell configuring a CG resource, the method further comprises:
receiving, by the sixth CU, an identifier that is of the candidate cell configuring the CG resource and that is sent by a fourth source CU, wherein the fourth source CU is a CU of a second network side device of a source cell.

44

43. A resource configuration apparatus, comprising:

a first receiving module, configured to receive first configured uplink grant information of a candidate cell used in an LTM procedure;
a first sending module, configured to send an uplink message to a target cell during a handover procedure according to the first configured uplink grant information; and
a first execution module, configured to release or deactivate the first configured uplink grant information of the candidate cell after a handover is successfully completed.

44. A resource configuration apparatus, comprising:

a second sending module, configured to send fifth configured uplink grant information to a second network side device, wherein the fifth configured uplink grant information is configured and sent before a procedure of early TA acquisition of a candidate cell is performed, or the fifth configured uplink grant information is configured and sent during or after a procedure of early TA acquisition of a candidate cell is performed, the fifth configured uplink grant information is configured by a first network side device for a terminal, the first network side device is a network side device of a candidate cell related to LTM, and the second network side device is a network side device of a source cell;
a sixth receiving module, configured to receive seventh indication information, wherein the seventh indication information is used to indicate the first network side device to release or deactivate a CG resource that is configured by the first network side device and that is associated with RACH-less LTM; and
a second execution module, configured to release or deactivate the CG resource according to the seventh indication information.

45. A resource configuration apparatus, comprising:

a seventh receiving module, configured to receive fifth configured uplink grant information sent by a first network side device, wherein the fifth configured uplink grant information is configured and sent before a procedure of early TA acquisition of a candidate cell is performed, or the fifth configured uplink grant information is configured and sent during or after a procedure of early TA acquisition of a candidate cell is performed, the fifth configured uplink grant information is configured by the first network side device for a terminal, and the first network side device is a network side device of a candidate cell related to LTM; and
a fourth sending module, configured to send seventh indication information to the first network side device, wherein the seventh indication information is used to indicate the first network side device to release or deactivate a CG resource that is configured by the first network side device and that is associated with RACH-less LTM.

46. A resource configuration apparatus, comprising:

a sixth sending module, configured to send seventh indication information to a first network side device;
wherein the seventh indication information is used to indicate the first network side device to release or deactivate a CG resource that is configured by the first network side device and that is associated with RACH-less LTM, and the first network side device is a network side device of another candidate cell different from a target cell in an LTM procedure.

47. A terminal, comprising a processor and a memory, wherein the memory stores a program or instructions capable of running on the processor, and the program or instructions are executed by the processor to implement the steps of the resource configuration method according to any one of claims 1 to 18.

48. A network side device, comprising a processor and a memory, wherein the memory stores a program or instructions capable of running on the processor, and when the program or the instructions are executed by the processor, the steps of the resource configuration method according to any one of claims 19 to 28, the steps of the resource configuration method according to any one of claims 29 to 37, or the steps of the resource configuration method according to any one of claims 38 to 42 are implemented.

49. A readable storage medium, wherein the readable storage medium stores a program or instructions, and when the program or the instructions are executed by a processor, the steps of the resource configuration method according to any one of claims 1 to 18, the steps of the resource configuration method according to any one of claims 19 to 28, the steps of the resource configuration method according to any one of claims 29 to 37, or the steps of the resource configuration method according to any one of claims 38 to 42 are implemented.

FIG. 1

A terminal receives first configured uplink grant information of a candidate cell used in an LTM procedure — 21

The terminal sends an uplink message to a target cell during a handover procedure according to the first configured uplink grant information — 22

The terminal releases or deactivates the first configured uplink grant information of the candidate cell after a handover is successfully completed — 23

FIG. 2

A first network side device sends fifth configured uplink grant information to a second network side device

31

The first network side device receives seventh indication information, where the seventh indication information is used to indicate the first network side device to release or deactivate a CG resource that is configured by the first network side device and that is associated with RACH-less LTM

32

The first network side device releases or deactivates the CG resource according to the seventh indication information

33

FIG. 3

The second network side device receives fifth configured uplink grant information sent by a first network side device

41

The second network side device sends seventh indication information to the first network side device, where the seventh indication information is used to indicate the first network side device to release or deactivate a CG resource that is configured by the first network side device and that is associated with RACH-less LTM

42

FIG. 4

A third network side device sends seventh indication information to a first network side device

51

FIG. 5

Resource configuration apparatus — 60

First receiving module — 61

First sending module — 62

First execution module — 63

FIG. 6

Resource configuration apparatus — 70

Second sending module — 71

Sixth receiving module — 72

Second execution module — 73

FIG. 7

Resource configuration apparatus — 80

Seventh receiving module — 81

Fourth sending module — 82

FIG. 8

Resource configuration apparatus — 90

Sixth sending module — 91

FIG. 9

100

Communication device

101 — Processor ⟺ Memory — 102

FIG. 10

FIG. 11

FIG. 12

## INTERNATIONAL SEARCH REPORT

| International application No. |
|---|
| **PCT/CN2024/111910** |

| A. | CLASSIFICATION OF SUBJECT MATTER |
|---|---|
| | H04W 36/00(2009.01)i |

According to International Patent Classification (IPC) or to both national classification and IPC

| B. | FIELDS SEARCHED |
|---|---|

Minimum documentation searched (classification system followed by classification symbols)

IPC: H04W,H04Q,H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, OETXT, VEN, WPABS: 层1或层2触发移动, 候选, 小区, 基站, 浪费, 目标, 目的, 配置, 授权, 切换, 去激活, 上行授权, 释放, 通知, 完成, 预留, 源, 指示, 资源, candidate, cell, CG, gNB, grant, LTM, target, UL, uplink, releas+, L1/L2, indicat+, deactiv+, complet+, notif+

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | ZTE CORP. et al. "Discussion on LTM Overall Procedure" <br> *3GPP TSG-RAN WG2 Meeting #121bis-e, R2-2303425*, 26 April 2023 (2023-04-26), <br> section 2 | 1-18, 43, 47, 49 |
| Y | FUTUREWEI. "Configuration for Measurement and RACH-less in Sequential LTM" <br> *3GPP TSG-RAN WG2 Meeting #122, R2-2304882*, 26 May 2023 (2023-05-26), <br> section 2 | 19-42, 44-46, 48, 49 |
| Y | WO 2021179139 A1 (GUANGDONG OPPO MOBILE COMMUNICATIONS CO., LTD.) 16 September 2021 (2021-09-16) <br> description, paragraphs [0059]-[0083], and figure 2 and 3 | 1-49 |
| A | CN 109565721 A (QUALCOMM INC.) 02 April 2019 (2019-04-02) <br> entire document | 1-49 |
| A | US 2021176677 A1 (LG ELECTRONICS INC.) 10 June 2021 (2021-06-10) <br> entire document | 1-49 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **12 October 2024** | **18 October 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/111910** |

| C. | DOCUMENTS CONSIDERED TO BE RELEVANT |
|---|---|

| Category* | Citation of document, with indication, where appropriate, of the relevant passages | Relevant to claim No. |
|---|---|---|
| A | OPPO. "Discussion on General Procedure for LTM"<br>*3GPP TSG-RAN WG2 Meeting #121, R2-2300380,* 28 February 2023 (2023-02-28),<br>entire document | 1-49 |

**INTERNATIONAL SEARCH REPORT**
Information on patent family members

International application No.

**PCT/CN2024/111910**

| Patent document cited in search report | | | Publication date (day/month/year) | Patent family member(s) | | | Publication date (day/month/year) |
|---|---|---|---|---|---|---|---|
| WO | 2021179139 | A1 | 16 September 2021 | EP | 4109965 | A1 | 28 December 2022 |
| | | | | US | 2023015847 | A1 | 19 January 2023 |
| | | | | CN | 115280841 | A | 01 November 2022 |
| CN | 109565721 | A | 02 April 2019 | JP | 2019527995 | A | 03 October 2019 |
| | | | | US | 2018049079 | A1 | 15 February 2018 |
| | | | | RU | 2019103681 | A | 14 September 2020 |
| | | | | BR | 112019002372 | A2 | 04 June 2019 |
| | | | | WO | 2018031931 | A1 | 15 February 2018 |
| | | | | EP | 3497969 | A1 | 19 June 2019 |
| | | | | TW | 201811077 | A | 16 March 2018 |
| | | | | KR | 20190039127 | A | 10 April 2019 |
| | | | | IN | 201847049374 | A | 15 February 2019 |
| | | | | ID | 201901339 | A | 22 February 2019 |
| US | 2021176677 | A1 | 10 June 2021 | WO | 2019160343 | A1 | 22 August 2019 |
| | | | | WO | 2019160342 | A1 | 22 August 2019 |
| | | | | US | 2020389886 | A1 | 10 December 2020 |

Form PCT/ISA/210 (patent family annex) (July 2022)

**EP 4 770 193 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311054353